(19) Europäisches Patentamt
European Patent Office
Office européen des brevets

(11) EP 3 675 119 A1

(12) # EUROPEAN PATENT APPLICATION
published in accordance with Art. 153(4) EPC

(43) Date of publication:
**01.07.2020 Bulletin 2020/27**

(21) Application number: **18849285.4**

(22) Date of filing: **21.08.2018**

(51) Int Cl.:
***G10K 11/168*** *(2006.01)* ***G10K 11/16*** *(2006.01)*
***G10K 11/162*** *(2006.01)* ***B60R 13/08*** *(2006.01)*
***E04B 1/86*** *(2006.01)*

(86) International application number:
**PCT/JP2018/030818**

(87) International publication number:
**WO 2019/039469 (28.02.2019 Gazette 2019/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.08.2017 JP 2017159150**

(71) Applicant: **FUJIFILM Corporation
Tokyo 106-8620 (JP)**

(72) Inventors:
- **HAKUTA Shinya
Ashigara-kami-gun
Kanagawa 258-8577 (JP)**
- **YAMAZOE Shogo
Ashigara-kami-gun
Kanagawa 258-8577 (JP)**

(74) Representative: **Hoffmann Eitle
Patent- und Rechtsanwälte PartmbB
Arabellastraße 30
81925 München (DE)**

(54) **SOUNDPROOF STRUCTURE AND SOUND ABSORPTION PANEL**

(57) An object is to provide a soundproof structure body and a sound absorbing panel that can obtain a high soundproofing performance in a wide frequency band, achieve miniaturization, and be used in various environments. A soundproof structure body includes three or more sheet members each having a plurality of through-holes that penetrate the sheet member in a thickness direction, in which an average opening diameter of the through-holes is 1 μm or more and 250 μm or less, the three or more sheet members are laminated in the thickness direction to be spaced apart from each other, and an inter-sheet distance of the sheet members adjacent to each other is 0.1 mm or more and 10 mm or less.

FIG. 1

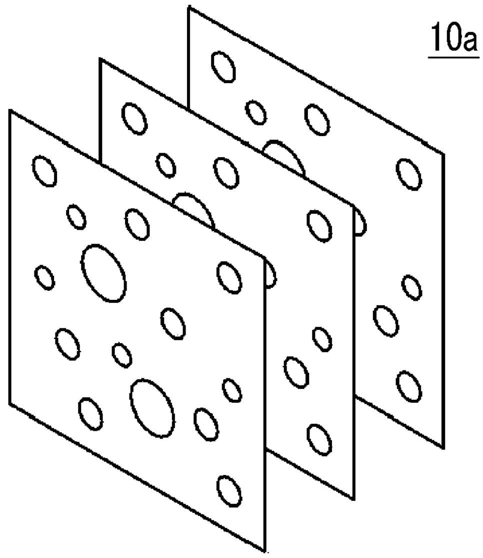


EP 3 675 119 A1

## Description

## BACKGROUND OF THE INVENTION

1. Field of the Invention

The present invention relates to a soundproof structure body and a sound absorbing panel.

2. Description of the Related Art

General noise has broad band frequencies in many cases. Low frequency sound is felt as pressure, mid-frequency (about 1000 Hz to 4000 Hz) sound is felt large because the sensitivity is good in terms of the structure of the ear, and high frequency sound is felt offensive. Therefore, it is required to take measures against broad band noise.

For example, in wind noise, there is noise having a sound pressure from a low frequency region to a high frequency region, such as white noise. For this reason, it is required to take measures against the broad band noise. In particular, in measures against noise in various apparatuses (office apparatuses such as copying machines, household appliances such as vacuum cleaners or air purifiers, automobiles, trains, and the like), a soundproof structure body that can realize soundproofing in a small space is required since the sizes of the apparatuses are limited.

Conventionally, a porous sound absorbing body such as urethane foam, glass wool, rock wool has been used as general soundproof materials against noise having broad band frequencies. However, in the case of using a porous sound absorbing body such as urethane foam, glass wool, rock wool as soundproof materials, a volume is required to increase a sound absorption rate. For that reason, there was a problem that soundproofing performance is not sufficiently obtained in a case where an internal size is limited. In particular, it is difficult to increase the sound absorption rate on a low frequency side, and there is a problem that a size is required to be increased according to a wavelength in order to correspond to a low frequency.

In addition, there has been a problem that materials are not strong to the environment such as ozone resistance, moisture resistance, heat resistance, flame retardance or the like and are deteriorated. In addition, since such materials are in the form of fibers, the dust of the fibers contaminates the environment. For this reason, since such materials cannot be used in a clean room, in an environment with precision equipment, or in a manufacturing site where contamination is an issue, there has been a problem, such as affecting a duct fan and the like. In addition, since a large amount of air is contained, there is a problem that heat insulating properties consequentially increase.

In order to solve the problems of contamination due to the dust of the fibers and durability, it is considered that a porous sound absorbing body is protected by disposing a film on a surface or applying a coating.

However, in order to absorb sound in a broad band up to a high frequency in the porous sound absorbing body, the air permeability of the surface of the porous sound absorbing body is required to be maintained. Therefore, a film cannot be disposed on the surface or a coating cannot be applied, and fibers is required to be exposed. It is also known that in a case where the fiber surface is coated, the sound absorption rate on the high frequency side is mainly reduced. Therefore, it has been difficult to solve the above-mentioned problems such as the contamination due to the dust of the fibers and the durability while using the porous sound absorbing body.

That is, a sound absorbing structure that can absorb sound over a broad band and does not use a porous sound absorbing body is being demanded.

On the other hand, as a soundproof structure body other than the porous sound absorbing body, there are structures using membrane vibration and Helmholtz resonance.

Since a soundproof structure body using the membrane vibration or the Helmholtz resonance does not require fibrous members, there is no contamination of the environment due to the dust of the fibers. In addition, since the soundproof structure body has high flexibilty in selecting materials compared with the porous sound absorbing body, it is easy to increase environmental resistance.

However, the soundproof structure body using the membrane vibration and the Helmholtz resonance absorbs sound in a specific frequency band. Therefore, it is difficult to widen the frequency band for sound absorption like a porous sound absorbing body.

Specifically, a soundproof structure body using membrane vibration is a structure that absorbs sound at a resonance frequency of the membrane vibration. Therefore, although absorption increases at the resonance frequency, sound absorption decreases at other frequencies. Thus it is difficult to widen the frequency band for sound absorption.

As disclosed in JP2007-256750Aand JP4567513B, for example, a soundproof structure body using the Helmholtz resonance has a configuration in which two or more plate-shaped members having a plurality of through-holes are disposed with a predetermined space so that an air layer is arranged and a configuration in which a plate-shaped member having a plurality of through-holes and a rigid body are disposed with a predetermined space so that an air layer is arranged.

Such the soundproof structure body using the Helmholtz resonance has a structure in which in a case where sound penetrates into through-holes from an outside, a portion controlled on the basis of the equation of motion in which an air in the through-holes is moved by sound and a portion controlled on the basis of the spring equation in which an air in a closed space repeatedly expands and compresses by sound are connected to each other. According to each equation, the movement of the air in the through-holes has coil-like behavior in which a pressure phase advances 90 degrees from a local speed phase, and the movement of the air in the closed space has capacitor-like behavior in which a pressure phase is delayed by 90 degrees from the local speed phase. Therefore, the Helmholtz resonance is an equivalent circuit of sound as a whole and a so-called LC series circuit, and has resonance determined by a through-hole area and length, and the volume of the closed space. Since sound frequently goes back and forth through the through-holes during the resonance, in the mean time, strong sound absorption occurs at a specific frequency due to friction with the through-holes.

As disclosed in JP2007-256750A, a configuration that absorbs sound using the Helmholtz resonance adopting a configuration in which the air layer is arranged on a rear surface of the plate-shaped member having the plurality of through-holes may obtain an excellent sound absorption rate near the resonance frequency due to the resonance used as a principle. However, a low sound absorption rate is obtained at frequencies other than the resonance frequency. Therefore, the frequency band capable of absorbing sound is narrow and it is difficult to widen the frequency band. Furthermore, since a closed space is necessarily provided on the back surface, there is a problem that the volume of the closed space becomes large.

In addition, in order for the phenomenon in which the air in the closed space repeatedly expands and compresses by sound as described above to follow the spring equation, it is limited to a case where a wavelength of the sound is sufficiently larger than the length of the closed space. In a case where the wavelength of the sound is about the length of the closed space or smaller than the closed space, sound interference and resonance occur in the closed space. As a result, a simple spring equation is not satisfied and the assumption of Helmholtz resonance fails.

On the other hand, in order to resonate the back closed space as a spring for sound having a long wavelength, it is required to increase the size of the closed space according to the wavelength of the sound, and the closed space which is too small with respect to the wavelength does not function.

Therefore, in order to obtain Helmholtz resonance, an upper limit and a lower limit of the size of the closed space are limited with respect to the wavelength of the sound subjected to soundproofing.

However, a frequency band of an audible range is as wide as 20 to 20,000 Hz. Therefore, in a case where the Helmholtz resonator is designed to absorb the sound on the high frequency side, the closed space size becomes too small with respect to a wavelength size on the low frequency side, and thus it is difficult to cause resonance. On the other hand, in a case where the Helmholtz resonator is designed to absorb the sound on the low frequency side, the closed space size becomes larger than a wavelength size on the high frequency side, and thus the assumption of Helmholtz resonance fails. Therefore, in the Helmholtz resonance, it is difficult to widen a bandwidth not only from a point of using resonance but also from a point of having behavior as the spring in the closed space.

## SUMMARY OF THE INVENTION

As described above, the porous sound absorbing body can absorb sound in the broad band, but there are problems that it is difficult to increase the sound absorption rate on the low frequency side, and it is required to increase the size according to the wavelength in order to correspond to the low frequency. In addition, there are problems of contamination due to the dust of the fibers and durability.

On the other hand, the soundproof structure body using the resonance phenomenon such as the membrane vibration or the Helmholtz resonance can achieve a smaller size than a size of the porous sound absorbing body and can solve the problems of contamination due to the dust of the fibers and durability. However, in principle, it is difficult to widen the bandwidth using the resonance phenomenon, and in particular, it is more difficult to realize the sound absorption characteristics that continue to a high frequency similar to a frequency which the porous sound absorbing body has.

An object of the present invention is to solve the above problems of the related art and provide a soundproof structure body and a sound absorbing panel which can obtain a high soundproofing performance in a wide frequency band similar to a frequency band which a porous sound absorbing body has, achieve miniaturization, and be used in various environments.

As a result of intensive studies to solve the above problems, the present inventors found that the problems can be solved and the present invention is achieved by providing three or more sheet members each having a plurality of through-holes that penetrate the sheet member in a thickness direction, in which an average opening diameter of the through-holes is 1 μm or more and 250 μm or less, the three or more sheet members are laminated in the thickness direction to be spaced apart from each other, and a distance between the sheet members adjacent to each other is 0.1 mm or more and 10 mm or less.

That is, it has been found that the aforementioned object can be achieved by the following configurations.

[1] A soundproof structure body comprising three or more sheet members each having a plurality of through-holes that penetrate the sheet member in a thickness direction, in which
an average opening diameter of the through-holes is 1 μm or more and 250 μm or less,
an average opening ratio of the through-holes is 0.1% or more and less than 10%,
the three or more sheet members are laminated in the thickness direction to be spaced apart from each other, and
a distance between the sheet members adjacent to each other is 0.1 mm or more and 10 mm or less.
[2] A soundproof structure body comprising three or more sheet members each having a plurality of through-holes that penetrate the sheet member in a thickness direction, in which
an average opening diameter of the through-holes is 1 μm or more and 250 μm or less,
a thickness of the sheet member is 1 μm or more and 300 μm or less,
the three or more sheet members are laminated in the thickness direction to be spaced apart from each other, and
an inter-sheet distance of the sheet members adjacent to each other is 0.1 mm or more and 10 mm or less.
[3] The soundproof structure body according to [1] or [2], in which
in a case of assuming that phi (μm) is the average opening diameter of the through-holes and t (μm) is a thickness of the sheet member, the average opening ratio rho of the through-holes is in a range larger than 0 and smaller than 1, and is in a range of rho_center = $(2 + 0.25 \times t) \times phi^{-1.6}$ as a center, rho_center - $(0.052 \times (phi/30)^{-2})$ as a lower limit, and rho_center + $(0.795 \times (phi/30)^{-2})$ as an upper limit.
[4] The soundproof structure body described in any one of [1] to [3], in which the average opening diameter of the through-holes is 0.1 μm or more and less than100 μm.
[5] The soundproof structure body according to any one of [1] to [4], in which a total thickness is 30 mm or less.
[6] The soundproof structure body according to any one of [1] to [5], in which the inter-sheet distance is 2 mm or more.
[7] The soundproof structure body according to any one of [1] to [6], in which at least one of the inter-sheet distances is different from other inter-sheet distances.
[8] The soundproof structure body according to [7], in which a longest distance among a plurality of inter-sheet distances is disposed on an outer side.
[9] The soundproof structure body according to [7] or [8], in which an order of the distances between the sheets is symmetrical.
[10] The soundproof structure body described in any one of [1] to [9], in which the plurality of through-holes are randomly arranged.
[11] The soundproof structure body according to any one of [1] to [10], in which the plurality of through-holes is formed of two or more opening diameters different from each other.
[12] The soundproof structure body according to any one of [1] to [11], in which a surface roughness Ra of an inner wall surface of the through-hole is 0.1 μm to 10.0 μm.
[13] The soundproof structure body according to any one of [1] to [12], in which
an inner wall surface of the through-hole is formed in a plurality of particulate shapes, and
an average particle diameter of protruding portions formed on the inner wall surface is 0.1 μm to 10.0 μm.
[14] The soundproof structure body described in any one of [1] to [13], in which at least some of the through-holes have a shape having a maximum diameter inside the through-hole.
[15] The soundproof structure body according to any one of [1] to [14], further comprising a spacer between the sheet members to ensure a distance between the sheet members adjacent to each other.
[16] The soundproof structure body according to any one of [1] to [15], in which a wall member is disposed on one surface side of the three or more laminated sheet members.
[17] The soundproof structure body according to any one of [1] to [16], in which a material of the sheet member is a metal material.
[18] The soundproof structure body according to [17], in which
the sheet member is formed of a conductive material, and
the average opening diameter of the through-holes is equal to or smaller than a wavelength size in a far infrared region such that an electromagnetic waves having a wavelength equal to or larger than a wavelength in the far infrared region is blocked.
[19] The soundproof structure body described in any one of [1] to [18], in which the sheet member is formed of a material having durability against ozone.
[20] The soundproof structure body described in any one of [1] to [19], in which a material of the sheet member is aluminum or an aluminum alloy.
[21] A sound absorbing panel comprising the soundproof structure body described in any one of [1] to [20].

According to the present invention, it is possible to provide a soundproof structure body and a sound absorbing panel that can obtain a high soundproofing performance in a wide frequency band, achieve miniaturization, and be used in various environments.

## BRIEF DESCRIPTION OF THE DRAWINGS

Fig. 1 is a perspective view conceptually showing an example of a soundproof structure body of the present invention.
Fig. 2 is a front view of the soundproof structure body shown in Fig. 1.
Fig. 3 is a cross-sectional view of the soundproof structure body shown in Fig. 1.
Fig. 4 is a perspective view conceptually showing another example of the soundproof structure body of the present invention.
Fig. 5 is a perspective view conceptually showing another example of the soundproof structure body of the present invention.
Fig. 6 is a perspective view conceptually showing another example of the soundproof structure body of the present invention.
Fig. 7 is a graph showing the relationship between a distance and the resolution of eyes.
Fig. 8 is a schematic cross-sectional view illustrating an example of a suitable method of manufacturing an aluminum plate of the present invention.
Fig. 9 is a schematic cross-sectional view illustrating an example of a suitable method of manufacturing an aluminum plate of the present invention.
Fig. 10 is a schematic cross-sectional view illustrating an example of a suitable method of manufacturing an aluminum plate of the present invention.
Fig. 11 is a schematic cross-sectional view illustrating an example of a suitable method of manufacturing an aluminum plate of the present invention.
Fig. 12 is a graph showing the relationship between a frequency and an absorbance.
Fig. 13 is a graph showing the relationship between a frequency and a transmittance.
Fig. 14 is a graph showing the relationship between a frequency and a reflectance.
Fig. 15 is a graph showing the relationship between a frequency and an absorbance.
Fig. 16 is a graph showing the relationship between a frequency and an absorbance.
Fig. 17 is a graph showing the relationship between a frequency and a sound absorption rate.
Fig. 18 is a graph showing the relationship between a frequency and an absorbance.
Fig. 19 is a graph showing the relationship between a frequency and an absorbance.
Fig. 20 is a graph showing the relationship between a frequency and an absorbance.
Fig. 21 is a graph showing the relationship between a frequency and an absorbance.
Fig. 22 is a graph showing the relationship between a frequency and an absorbance.
Fig. 23 is a graph showing the relationship between a frequency and an absorbance.
Fig. 24 is a graph showing the relationship between an average opening diameter and an optimal average opening ratio.
Fig. 25 is a graph showing the relationship between an average opening ratio and a maximum absorbance.
Fig. 26 is a graph showing the relationship between an average opening ratio and a maximum absorbance.

## DESCRIPTION OF THE PREFERRED EMBODIMENTS

Hereinafter, the present invention will be described in detail.
The description of constituent elements described below is made based on representative embodiments of the present invention, but the present invention is not limited to such embodiments. In the drawings of the present specification, the scale of each part is appropriately modified in order for easy visual recognition.
The numerical range expressed by using "to" in this specification means a range including numerical values described before and after "to" as a lower limit value and an upper limit value.
In the present specification, "orthogonal" and "parallel" include an error range allowed in the technical field to which the present invention belongs. For example, "orthogonal" and "parallel" mean a range that the angle is within $\pm$ 10° with respect to strict orthogonality or parallelism, and an error with respect to strict orthogonality or parallelism is preferably 5° or less, more preferably 3° or less.
In the present specification, "same" and "the same" include an error range generally allowed in the technical field. In addition, in the present specification, in a case of describing "entirety", "any", "entire surface" or the like, an error range generally allowed in the technical field is included, for example, 99% or more, 95% or more, or 90% or more in addition to corresponding to 100%.

[Soundproof structure body]

A first aspect of a soundproof structure body according to the present invention includes three or more sheet members each having a plurality of through-holes that penetrate the sheet member in a thickness direction, in which an average opening diameter of the through-holes is 1 μm or more and 250 μm or less, an average opening ratio of the through-holes is 0.1% or more and less than 10%, the three or more sheet members are laminated in the thickness direction to be spaced apart from each other, and a distance between the sheet members adjacent to each other is 0.1 mm or more and 10 mm or less.

A second aspect of a soundproof structure body according to the present invention includes three or more sheet members each having a plurality of through-holes that penetrate the sheet member in a thickness direction, in which an average opening diameter of the through-holes is 1 μm or more and 250 μm or less, a thickness of the sheet member is 1 μm or more and 300 μm or less, the three or more sheet members are laminated in the thickness direction to be spaced apart from each other, and a distance between the sheet members adjacent to each other is 0.1 mm or more and 10 mm or less.

The configuration of the soundproof structure body according to the embodiment of the present invention will be described with reference to Figs. 1 to 3.

Fig. 1 is a schematic perspective view showing an example of a suitable embodiment of a soundproof structure body of the present invention, Fig. 2 is a front view of Fig. 1, and Fig. 3 is a cross-sectional view of Fig. 1.

As shown in Figs. 1 to 3, a soundproof structure body 10 has three or more sheet members 12 each having a plurality of micro through-holes 14 penetrating in a thickness direction. The three or more sheet members 12 are laminated in the thickness direction to be spaced apart from each other at a predetermined distance.

As described in detail later, the sheet member 12 having the micro through-hole 14 absorbs sound by friction between an inner wall surface of the through-hole and an air in a case where sound passes through the micro through-hole. According to the studies conducted by the present inventors, by forming a plurality of micro through-holes of 1 μm to 250 μm in the sheet member 12, absorbance of about 50% is achieved in a wide frequency band even though the sheet member 12 is a single body.

Here, in the soundproof structure body of the embodiment of the present invention, such sheet members 12 are laminated in the thickness direction to be spaced apart from each other, and a distance between sheets (hereinafter, referred to as an inter-sheet distance) of the sheet members 12 adjacent to each other is 0.1 mm or more and 10 mm or less.

Thus, by laminating the three or more sheet members 12 to be spaced from each other at a predetermined distance, each sheet member 12 can sufficiently exhibit soundproofing performance without the sheet members 12 blocking the through-holes each other. Therefore, as a whole, the absorbance can be higher than a single body of the sheet member 12 in the wide frequency band, and higher soundproofing performance can be obtained.

Furthermore, since the principle of the Helmholtz resonance is not used, the absorbance basically increases toward high frequencies. Therefore, the same effect with a general soundproofing material can be obtained without a porous sound absorbing body that is a general soundproof material such as urethane foam, glass wool, rock wool, and the like. Accordingly, the present invention can be applied to a case where it is difficult to use a porous sound absorbing body which is a general soundproof material.

In addition, from the viewpoint of each sheet member 12 exhibiting sufficient soundproofing performance, the inter-sheet distance is 0.1 mm or more. Accordingly, the inter-sheet distance can be reduced, and the thickness of the sheet member 12 itself is thin. Therefore a total thickness of the soundproof structure body can be reduced and miniaturized.

Furthermore, in a case where the inter-sheet distance is increased, sound interference appears due to the inter-sheet distance being approximately equal to a wavelength of a sound wave, so that flat sound absorption characteristics disappear. Therefore, by setting the inter-sheet distance to 10 mm or less, sound interference due to the inter-sheet distance can be suppressed, and the flat sound absorption characteristics can be ensured.

In addition, since the soundproof structure body is formed with the micro through-hole 14 on the sheet member 12 thereby functioning, the flexibility in material selection is high, and it is difficult to contaminate the environment due to the dust of the fibers and the like. Furthermore, regarding the problems of environmental resistance such as ozone resistance, moisture resistance, heat resistance, and flame retardance, since materials can be selected according to the environment, the problems can be reduced.

Here, in a general soundproof structure body, since the size of the soundproof cell is much smaller than the wavelength of the sound wave, it is difficult to realize absorbance greater than 50% in a single structure. That is, even though a film (sheet member) is formed with the micro through-holes, the absorbance greater than 50% in a single layer cannot be obtained.

It can be seen from the absorbance obtained from the following the equation of continuity for the sound wave pressure.

The absorbance A (Absorbance) is determined as A = 1-T-R.

The transmittance T (Transmittance) and the reflectance R (Reflectance) are represented by a transmission coefficient t and a reflection coefficient r, and $T = |t|^2$ and $R = |r|^2$.

Assuming that the incident sound pressure is $p_I$, the reflected sound pressure is $p_R$, and the transmitted sound pressure is $p_T$ ($p_I$, $p_R$, $p_T$ are complex numbers), the equation of continuity of the pressure which is the basic equation of sound waves interacting with a structure having a single layer of a film is $p_I = p_T + p_R$. Since $t = p_T/p_I$ and $r = p_R/p_I$, the equation of continuity of the pressure is expressed as follows.

$$1 = t + r$$

Thereby, the absorbance A is obtained. Re represents the real part of the complex number, and Im represents the imaginary part of the complex number.

$$\begin{aligned} A &= 1\text{-}T\text{-}R = 1-|t|^2-|r|^2 = 1-|t|^2-|1-t|^2 \\ &= 1-(\mathrm{Re}(t)^2 + \mathrm{Im}(t)^2) - ((\mathrm{Re}(1-t))^2 + (\mathrm{Im}(1-t))^2) \\ &= 1-(\mathrm{Re}(t)^2 + \mathrm{Im}(t)^2) - (1-2\mathrm{Re}(t) + \mathrm{Re}(t)^2 + \mathrm{Im}(t))^2) \\ &= -2\mathrm{Re}(t)^2 + 2\mathrm{Re}(t) - 2\mathrm{Im}(t)^2 \\ &= 2\mathrm{Re}(t) \times (1-\mathrm{Re}(t)) - 2\mathrm{Im}(t)^2 < 2\mathrm{Re}(t) \times (1-\mathrm{Re}(t)) \end{aligned}$$

The above equations are an expression form of $2x \times (1-x)$ and in a range of $0 \leq x \leq 1$.

In this case, it can be seen that the maximum value of x is obtained in a case of x = 0.25, and $2 \times (1-x) \leq 0.5$. Therefore, $A < \mathrm{Re}(t) \times (1-\mathrm{Re}(t)) \leq 0.5$ is assumed, and the absorbance in the single structure can be 0.5 at the maximum.

In this way, it can be seen that the absorbance of a structure having a single layer sheet member is usually 50% or less.

On the other hand, an upper limit of the above-described absorbance is established for the single soundproof structure body. Thereby, in a case where a multi-layered soundproof structure body exists in a sound traveling direction, even though an upper limit is 50% of absorbance in the single soundproof structure body, the single soundproof structure body can realize absorbance exceeding the absorbance due to the multi-layered structure. The present invention is the invention regarding a structure in which sheet members having multi-layered micro through-holes are laminated to be spaced from each other at a relatively small distance so as to obtain absorbance far exceeding 50% of the absorbance.

Here, from a viewpoint of soundproofing performance and miniaturization, the inter-sheet distance is preferably 1 mm or more and 8 mm or less, and more preferably 2 mm or more and 5 mm or less.

In addition, from the viewpoint of the soundproofing performance and miniaturization, a total thickness of the soundproof structure body 10a having three or more sheet members 12 laminated to be spaced from each other at the inter-sheet distance is preferably 30 mm or less, more preferably 21 mm or less, and even more preferably 3 mm or more and 11 mm or less.

The inter-sheet distance is a distance between the sheet members adjacent to each other. In addition, in a case where the sheet member has the unevenness on a surface thereof, and/or in a case where the sheet member is held to be curved, the inter-sheet distance is an average distance between the sheet members.

As described later, in a case where a spacer is arranged between the sheet members, an average distance within a frame of the spacer (inside an opening portion) can be assumed as the inter-sheet distance.

Here, a method of holding each sheet member 12 is not limited, but it is preferable that the spacer is arranged between the sheet members 12 to hold the inter-sheet distance.

For example, in the soundproof structure body 10b shown in Fig. 4, the sheet member 12, the spacer 20a, the sheet member 12, the spacer 20a, and the sheet member 12 are laminated in this order.

The spacer 20a is a frame having a size substantially the same as a size of the sheet member 12 (the size in plan view), and the sheet members 12 are adhered to both surfaces (opening surfaces) respectively. The thickness of the spacer 20a is 0.1 mm or more and 10 mm or less and is the same as the inter-sheet distance.

Thus, the sheet member 12 is adhered to the spacer 20a, so that the three or more sheet members 12 can be held appropriately while maintaining the inter-sheet distance.

The spacer for holding the sheet member 12 is not limited to a frame-shaped member. For example, similar to the soundproof structure body 10c shown in Fig. 5, a plate-shaped member having a plurality of opening portions 21 such as a punching metal may be used as the spacer 20b.

The opening diameter and the opening ratio of the opening portion 21 may be an opening diameter and an opening ratio which can maintain the strength capable of holding the sheet member 12 without blocking many of the plurality of through-holes 14 of the sheet member 12. From such a viewpoint, the opening diameter of the opening portion 21 is preferably 0.1 mm to 500 mm, and more preferably 1 mm to 50 mm. The opening ratio is preferably 30% to 95%, more preferably 50% to 90%.

The materials of the spacer may be materials having the strength for holding the sheet member 12, and metal, plastics, wood and the like can be used.

Here, an example shown in Fig. 3 represents a configuration having a sheet member 12 formed of three sheets. However, the sheet member is not limited thereto, and a configuration having a sheet member 12 formed of four or more sheets may be provided.

In a case where the number of sheet members 12 is too large, it is complicated to produce a laminated structure, and the cost increases due to the increase in the number of sheets. In addition, there is a possibility of causing problems such as an increase in the total weight, a complicated structure for maintaining the distance due to an excessively short inter-sheet distance, or the like. Accordingly, the number of sheet members is preferably 20 or less, more preferably 11 or less, and even more preferably 6 or less.

In the example shown in Fig. 3, the sheet members 12 are configured to be arranged at equal distance, that is, distances between the sheets are the same. However, the distance is not limited thereto, and arrangement distances of the sheet members 12 (inter-sheet distance) may be different from each other.

In a case where the distances between the sheets are different, the sheet members 12 are preferably arranged so as to increase the inter-sheet distance toward an outside. For example, in a case where the sheet member 12 having five sheets is provided, three inter-sheet distances are 2 mm, and one inter-sheet distance is 3 mm, it is preferable to arrange the sheets to have an arrangement of 2 mm-2 mm-2 mm-3 mm rather than an arrangement of 2 mm-2 mm-3 mm-2 mm.

In addition, in a case where the distances between the sheets are different, the sheet members 12 are preferably arranged so that the order of the inter-sheet distance is symmetric.

For example, in a case where the sheet member 12 having five sheets is provided, two distances between sheets are 2 mm, and two distances between sheets are 3 mm, the sheets are preferably arranged to have an arrangement of 2 mm-3 mm-3 mm-2 mm, more preferably arranged to have an arrangement of 3 mm-2 mm-2 mm-3 mm rather than an arrangement of 2 mm-3 mm-2 mm-3 mm.

In addition, similar to the soundproof structure body 10d shown in Fig. 6, the soundproof structure body of the embodiment of the present invention may have a wall member 22 arranged on one surface side of the laminated three or more sheet members 12.

The wall member 22 is a plate-shaped member that can be substantially regarded as a rigid body.

The wall member 22 is not limited, but the wall, floor, and ceiling of a building, a sheet metal or floor of a transportation machine such as a car, a plate of general furniture such as a desk, a soundproof wall, a road, a plate such as a partition, the surface of home appliances, the surface of office equipment, an internal duct, an industrial machine surface, a metal plate, and the like can be mentioned. Since the acoustic impedance of air and the acoustic impedance of solids are greatly different for most materials, the surface reflection is very large regardless of the material, such as metal, plastic, and wood. Therefore, wall members formed of these materials can be substantially regarded as rigid bodies.

As described above, since by providing the wall member 22, the sound transmitted through the sheet member 12 is totally reflected by the wall member 22 and is incident on the sheet member 12 again, it is possible to further increase the soundproofing performance.

In addition, from the viewpoint of soundproofing performance and miniaturization, the distance between the sheet member 12 and the wall member 30 is preferably 1 mm or more and 30 mm or less, and more preferably 2 mm or more and 10 mm or less.

In a configuration having the wall member 22, a spacer may be disposed between the sheet member 12 and the wall member 22. In addition, the sheet member 12, the spacer, and the wall member 22 may be formed as an integrated cell structure.

That is, by adopting a movable shape for a structure in which the wall member 22, the spacer, and the sheet member 12 are in contact with each other, the structure can be used as a portable sound absorbing board or sound absorbing cell. Specifically, the structure is a structure in which a spacer is bonded to a plastic or metal plate (wall member) and a sheet member having micro through-holes is attached to the surface of the spacer, and it is possible to form a cell that can be carried by making the plastic or metal plate thin. A plurality of such cells are arranged and attached to a wall or the like to function as a sound absorbing panel or a sound adjusting panel. The sound absorbing panel is intended for sound absorption, and is used, for example, in a conference room or a store to remove noise in order to clarify the sound. In addition, the sound adjusting panel is used to adjust the sound by adjusting the absorption or diffusion of the sound. For example, the sound adjusting panel is used to adjust the sound of a concert hall.

In addition, a cell in which a spacer and a sheet member having micro through-holes are attached to a plastic or metal plate with a smaller size of several centimeters can be used as a soundproof cell that is disposed in a duct, an air supply unit, and the like of various apparatuses to obtain the soundproofing performance. Thus, by also including the wall member in the integrated cell structure, it is possible to obtain the soundproofing performance without caring about the distance between the sound absorbing body and the wall member at the time of installation.

[sheet member]

The sheet member 12 is a member having a plurality of through-holes 14 penetrating in the thickness direction.

The average opening diameter of the formed through-holes is 1 μm or more and less than 250 μm so that the sheet member 12 absorbs sound by friction between the inner wall surface of the through-hole and air in a case where sound passes through the micro through-hole. That is, even though there is a closed space, the volume of the closed space is different from the optimal volume for the conventional Helmholtz resonance, and thus sound is absorbed by a mechanism that is not using resonance in the closed space. Thus, the sheet member 12 does not use the principle of Helmholtz resonance in which connection between an air layer in the through-hole and an air layer in the closed space functions as a mass spring to cause resonance and absorb sound.

The present inventors presumed that the mechanism of sound absorption of the sheet member having the plurality of micro through-holes is a change of sound energy to heat energy due to friction between the inner wall surface of the through-hole and the air in a case where the sound passes through the micro through-hole. This mechanism is caused by the small size of the through-hole size. Therefore, the mechanism is different from a mechanism due to resonance. A path in which sound in the air directly passes through the through-hole has a much smaller impedance than a path in which sound is converted into membrane vibration and then emitted again. Therefore, the sound more easily passes through the membrane vibration than the micro through-hole. In a case where the sound passes through the through-hole portion, the sound is concentrated from a wide area on the entire sheet member to a narrow area of the through-hole to pass through the through-hole portion. The local speed extremely increases as the sound collects in the through-hole. Since friction correlates with speed, the friction in the micro through-holes increases to be converted into heat.

In a case where the average opening diameter of the through-holes is small, the ratio of the edge length of the through-hole to the opening area is large. Therefore, it is thought that the friction generated at the edge portion or the inner wall surface of the through-hole can be increased. Further, since sound absorption by friction due to the viscosity of air is used as a mechanism, the sound absorption performance depends on the size of the viscous characteristic length generated near the wall. Since the smaller the average opening diameter, the greater the proportion of a region within the viscous characteristic length within the through-hole, sound absorption is advantageous. It is known that the viscous characteristic length is about 0.22 [mm] $\times \sqrt{(100\ [\mathrm{Hz}]/f_0)}$ assuming that the frequency of sound is $f_0$ [Hz] in a case where a medium is air.

By increasing the friction in a case where the sound passes through the through-hole, the sound energy can be converted into heat energy. As a result, the sound can be absorbed.

Furthermore, according to the studies conducted by the present inventors, there is an optimal ratio to the average opening ratio of the through-holes, and in particular in a case where the average opening diameter is relatively large, such as about 50 μm or more, the smaller the average opening ratio, the higher the absorbance. In a case where the average opening ratio is large, sound passes through each of the through-holes. On the other hand, in a case where the average opening ratio is small, the number of through-holes is reduced, so that the sound passing through one through-hole is large. Accordingly, the local velocity of the air passing through the through-hole further increases, and the friction generated at the edge portion and the inner wall surface of the through-hole can be further increased.

Thus, since the sheet member functions as the single sheet member having the through-holes without the closed space on the rear surface, the size can be reduced.

In addition, as described above, since the sheet member absorbs sound by friction in a case where the sound passes through the through-hole, it is possible to absorb the sound regardless of the frequency band of the sound, and absorb sound in the broad band.

Furthermore, since there is no closed space on the rear surface, air permeability can be ensured.

In addition, since through-holes are provided, light can be transmitted while being scattered.

In addition, since micro through-holes are provided to function, the flexibility in material selection is high. Therefore, the problem of contamination of the surrounding environment or the environmental performance issue can also be reduced because the material can be selected according to the environment.

The sheet member has micro through-holes. Accordingly, even in a case where a liquid such as water adheres to the sheet member, water does not block the through-hole by avoiding the through-hole due to the surface tension, so that the sound absorption performance is hardly lowered.

In addition, since the sheet member is a thin plate-shaped (film-shaped) member, the sheet member can be bent according to the arrangement location.

From the viewpoint of soundproofing performance and the like, the average opening diameter of the plurality of through-holes 14 of the sheet member 12 is 1 μm or more and 250 μm or less, preferably 1 μm or more and less than 100 μm, and more preferably 10 μm or more and 50 μm or less. This is because the ratio of the length of the edge of the through-hole contributing to friction in the through-hole to the opening area of the through-hole increases as the average opening diameter of the through-hole decreases and accordingly friction easily occurs. In addition, in a case where the average opening diameter is too small, since the viscous resistance in a case where the sound passes through the through-hole is too high, the sound does not pass through the through-hole sufficiently. Therefore, even in a case where the opening ratio is increased, a sufficient sound absorption effect cannot be obtained.

Furthermore, from the viewpoint of soundproofing performance and the like, the average opening ratio of the through-holes 14 of the sheet member 12 is preferably 0.1% or more and less than 10%, and more preferably 1% or more and less than 8%.

Furthermore, from the viewpoints of soundproofing performance, miniaturization, productivity, and the like, the thickness of the sheet member 12 is preferably 1 μm or more and 300 μm or less, and more preferably 10 μm or more and 80 μm or less. It is considered that since the friction energy received in a case where the sound passes through the through-hole increases as the thickness increases, the sound absorption performance is further improved. In addition, in a case where the sheet member is extremely thin, it is difficult to handle the sheet member and the sheet member is easy to break. For this reason, it is preferable to have a thickness enough to hold the sheet member. On the other hand, in terms of miniaturization, air permeability, and light transmittance, it is preferable that the thickness is small. In a case where etching or the like is used for the method of forming the through-hole, a longer manufacturing time is required as the thickness becomes larger. Therefore, from the viewpoint of productivity, it is preferable that the thickness is small. Moreover, since it is difficult to form a through-hole of 250 μm or less in a case where thickness is thick, the thinner thickness is preferable from this point.

Here, the sheet member 12 preferably has a configuration that in a case where the average opening diameter of the plurality of through-holes 14 is 1 μm or more and less than 100 μm, the average opening diameter is phi (μm), and the thickness of the sheet member 12 is t (μm), the average opening ratio rho of the through-holes 14 is in a range more than 0 and less than 1, in which the range is in a range of rho_center = $(2 + 0.25 \times t) \times phi^{-1.6}$ as a center, rho_center - $(0.052 \times (phi/30)^{-2})$ as a lower limit, and rho_center + $(0.795 \times (phi/30)^{-2})$ as an upper limit.

In a case where the average opening diameter of the through-holes is 1 μm or more and less than 100 μm, the average opening diameter of the plurality of through-holes 14 is phi (μm), and the thickness of the sheet member 12 is t (μm), the average of the through-holes 14, the average opening ratio rho is in a range more than 0 and less than 1, in which the range is in a range of rho_center = $(2 + 0.25 \times t) \times phi^{-1.6}$ as a center, rho_center - $(0.052 \times (phi/30)^{-2})$ as a lower limit, and rho_center + $(0.795 \times (phi/30)^{-2})$ as an upper limit so that the higher sound absorption effect can be obtained.

The average opening ratio rho is preferably in a range of rho_center-0.050 $\times$ $(phi/30)^{-2}$ or more and rho_center+0.505 $\times$ $(phi/30)^{-2}$ or less, more preferably in a range of rho_center-0.048 $\times$ $(phi/30)^{-2}$ or more and rho_center+0.345 $\times$ $(phi/30)^{-2}$ or less, even more preferably in a range of rho_center-0.085 $\times$ $(phi/20)^{-2}$ or more and rho_center+0.35 $\times$ $(phi/20)^{-2}$ or less, particularly preferably in a range of (rho_center-0.24 $\times$ $(phi/10)^{-2}$) or more and (rho_center+0.57 $\times$ $(phi/10)^{-2}$) or less, and most preferably in a range of (rho_center-0.185 $\times$ $(phi/10)^{-2}$) or more and (rho_center+0.34 $\times$ $(phi/10)^{-2}$) or less. This point will be described in detail in a simulation described later.

For the average opening diameter of through-holes, the surface of the sheet member is imaged at a magnification of 200 times from one surface of the sheet member using a high resolution scanning electron microscope (SEM), 20 through-holes whose surroundings are annularly connected are extracted in the obtained SEM photograph, the opening diameters of the through-holes are read, and the average value of the opening diameters is calculated as the average opening diameter. In a case where there are less than 20 through-holes in one SEM photograph, SEM photographs are taken at different positions in the surrounding area and counted until the total number reaches 20.

The opening diameter was evaluated using a diameter (circle equivalent diameter) in a case where the area of the through-hole portion was measured and replaced with a circle having the same area. That is, since the shape of the opening portion of the through-hole is not limited to the approximately circular shape, the diameter of a circle having the same area was evaluated in a case where the shape of the opening portion is a non-circular shape. Therefore, for example, even in the case of through-holes having such a shape that two or more through-holes are integrated, these are regarded as one through-hole, and the circle equivalent diameter of the through-hole is taken as the opening diameter.

For these tasks, for example, all circle equivalent diameters, opening ratios, and the like can be calculated by Analyze Particles using "Image J" (https://imagej.nih.gov/ij/).

In addition, for the average opening ratio, using the high resolution scanning electron microscope (SEM), the surface of the sheet member is imaged from directly thereabove at a magnification of 200 times, a through-hole portion and a non-through-hole portion are observed by performing binarization with image analysis software or the like for the field of view (five places) of 30 mm $\times$ 30 mm of the obtained SEM photograph, a ratio (opening area/geometric area) is calculated from the sum of the opening areas of the through-holes and the area of the field of view (geometric area), and an average value in each field of view (five places) is calculated as the average opening ratio.

Here, in the sheet member, the plurality of through-holes may be regularly arranged, or may be randomly arranged. From the viewpoints of productivity of micro through-holes, robustness of sound absorption characteristics, suppression of sound diffraction, and the like, it is preferable that the through-holes are randomly arranged. Regarding sound diffraction, in a case where the through-holes are periodically arranged, a diffraction phenomenon of sound occurs according to the period of the through-hole. Accordingly, there is a concern that the sound is bent by diffraction and the traveling direction of noise is divided into a plurality of directions. Random is an arrangement state in which there is no periodicity like a complete arrangement, and the absorption effect by each through-hole appears but the sound diffraction phenomenon due to the minimum distance between through-holes does not occur.

From the viewpoints of productivity, it is easier to form collectively random patterns such as surface treatment than a process for manufacturing a periodic arrangement in order for mass-production.

In the present invention, the fact that the through-holes are randomly arranged is defined as follows.

In the case of the completely periodic structure, strong diffracted light appears. Even in a case where only a small part of the periodic structure is different in position, diffracted light appears due to the remaining structure. Since the diffracted light is a wave formed by superimposing scattered light beams from the basic cell of the periodic structure, interference due to the remaining structure causes the diffracted light even in a case where only a small part is disturbed. This is a mechanism of the diffracted light.

Therefore, as the number of basic cells disturbed from the periodic structure increases, the amount of scattered light that causes interference for making the intensity of diffracted light strong is reduced. As a result, the intensity of diffracted light is reduced.

Accordingly, "random" in the present invention indicates that at least 10% of all the through-holes deviate from the periodic structure. From the above discussion, in order to suppress the diffracted light, the more basic cells deviating from the periodic structure, the more desirable. For this reason, a structure in which 50% of all the through-holes is deviated is preferable, a structure in which 80% of all the through-holes is deviated is more preferable, and a structure in which 90% of all the through-holes is deviated is even more preferable.

As a verification of the deviation, it is possible to take an image in which five or more through-holes are present and analyze the image. As the number of through-holes included becomes higher, it is possible to perform the more accurate analysis. Any image can be used as long as the image is an image that can be recognized by an optical microscope and an SEM, and an image in which the positions of a plurality of through-holes can be recognized.

In a captured image, focusing on one through-hole, a distance between the one through-hole and a through-hole therearound is measured. It is assumed that the shortest distance is a1 and the second, third and fourth shortest distances are a2, a3, and a4. In a case where two or more distances of a1 to a4 are the same (for example, the matching distance is assumed to be b1), the through-hole can be determined as a hole having a periodic structure with respect to the distance b1. On the other hand, in a case where neither distances of a1 to a4 are the same, the through-hole can be determined as a through-hole deviating from the periodic structure. This work is performed for all the through-holes on the image to perform determination.

Here, the above "the same" is assumed to be the same up to the deviation of $\phi$ assuming that the hole diameter of the through-hole of interest is $\phi$. That is, it is assumed that a2 and a1 are the same in the case of the relationship of $a2 - \phi < a1 < a2 + \phi$. It is thought that this is because scattered light from each through-hole is considered for diffracted light and scattering occurs in the range of the hole diameter $\phi$.

Then, for example, the number of "through-holes having a periodic structure with respect to the distance of bl" is counted, and the ratio of the number of the through-holes having a periodic structure with respect to the distance of b1 to the number of all the through-holes on the image is calculated. Assuming that the ratio is c1, the ratio c1 is the ratio of through-holes having a periodic structure, 1 - c1 is the ratio of through-holes deviated from the periodic structure, 1 - c1 is a numerical value that determines the above-described "random". In a case where there are a plurality of distances, for example, "through-holes having a periodic structure with respect to the distance of bl" and "through-holes having a periodic structure with respect to the distance of b2", counting is separately performed for b1 and b2. Assuming that the ratio of the periodic structure with respect to the distance of b1 is c1 and the ratio of the periodic structure with respect to the distance of b2 is c2, the structure in a case where both (1 - c1) and (1 - c2) are 10% or more is "random".

On the other hand, in a case where either (1 - c1) or (1 - c2) is less than 10%, the structure has a periodic structure and is not "random". In this manner, for all of the ratios c1, c2, ..., in a case where the condition of "random" is satisfied, the structure is defined as "random".

In addition, in a case where the shape of the opening of the through-hole is non-circular, it is considered that the shape of the opening corresponds to the circle of which area is the same, and the above process can be applied by using a circle equivalent diameter.

A plurality of through-holes may be through-holes having one kind of opening diameter, or may be through-holes having two or more kinds of opening diameters. From the viewpoints of productivity, durability, and the like, it is preferable to form through-holes having two or more kinds of opening diameters.

As for the productivity, as in the above random arrangement, from the viewpoint of performing etching treatment in a large quantity, the productivity is improved by allowing variations in the hole diameter. In addition, from the viewpoint of durability, the size of dirt or dust differs depending on the environment. Accordingly, assuming that through-holes having one kind of opening diameter are provided, all the holes are influenced in a case where the size of the main dust almost matches the size of the through-hole. By providing through-holes having a plurality of kinds of opening diameters, a device that can be applied in various environments is obtained.

By using the manufacturing method disclosed in WO2016/060037A, it is possible to form a through-hole having a maximum diameter at the inside, in which the hole diameter increases inside the through-hole. Due to this shape, dust (dirt, toner, nonwoven fabric, foamed material, or the like) of about the size of the through-hole is less likely to clog the inside. Therefore, the durability of the film having through-holes is improved.

Dust larger than the diameter of the outermost surface of the through-hole does not intrude into the through-hole, while dust smaller than the diameter can pass through the through-hole as it is since the internal diameter is increased.

Considering a shape in which the inside is narrowed as the opposite shape, compared with a situation in which dust passing through the outermost surface of the through-hole is caught in an inner portion with a small diameter and the dust is left as it is, it can be seen that the shape having a maximum diameter at the inside functions advantageously in suppressing the clogging of dust.

In addition, in a shape in which one surface of the film has a maximum diameter and the inner diameter decreases approximately monotonically, such as a so-called tapered shape, in a case where dust satisfying the relationship of "maximum diameter > dust size > diameter of the other surface" enters from the side having the maximum diameter, a possibility that the internal shape functions as a slope and becomes clogged in the middle is further increased.

In addition, from the viewpoint of further increasing the friction in a case where the sound passes through the through-hole, it is preferable that the inner wall surface of the through-hole is roughened. Specifically, the surface roughness Ra of the inner wall surface of the through-hole is preferably 0.1 μm or more, more preferably 0.1 μm to 10.0 μm, and even more preferably 0.2 μm or more and 1.0 μm or less.

Here, the surface roughness Ra can be measured by measuring the inside of the through-hole with an atomic force microscope (AFM). As the AFM, for example, SPA 300 manufactured by Hitachi High-Tech Sciences Co., Ltd. can be used. The cantilever can be measured in a dynamic force mode (DFM) using the OMCL-AC200TS. Since the surface roughness of the inner wall surface of the through-hole is about several microns, it is preferable to use the AFM from the viewpoint of having a measurement range and accuracy of several microns.

In addition, it is possible to calculate the average particle diameter of protruding portions by regarding each one of the protruding portions of the unevenness in the through-hole as a particle from the SEM image in the through-hole.

Specifically, an SEM image (field of view of about 1 mm × 1 mm) captured at a magnification of 2000 times is captured into Image J and binarized into black and white so that the protruding portion is white, and the area of each protruding portion is calculated by Analyze Particles. A circle equivalent diameter assuming a circle having the same area as the area of each protruding portion is calculated for each protruding portion, and the average value was calculated as the average particle diameter.

The average particle diameter of the protruding portion is preferably 0.1 μm or more and 10.0 μm or less, and more preferably 0.15 μm or more and 5.0 μm or less.

Here, in the simulation result to be described later, the speed in the through-hole was measured after calculating in a simulation of a design corresponding to Example 1. The speed in the through-hole is about $5 \times 10^{-2}$ (m/s) in a case where the sound pressure is 1 [Pa] (= 94 dB), and about $1 \times 10^{-3}$ (m/s) in a case where the sound pressure is 60 dB.

In a case where sound having a frequency of 2500 Hz is absorbed, the local movement speed of a medium through which the sound wave propagates can be known from the local movement speed. From this, the movement distance was determined on the assumption that particles were vibrating in the penetration direction of the through-hole. Since the sound vibrates, the distance amplitude is a distance by which movement can be made within a half cycle. At 2500 Hz, since one cycle is 1/2500 seconds, half of the time can be in the same direction. The maximum movement distance (sound movement distance) in the sound wave half cycle determined from the local speed is 10 μm at 94 dB and 0.2 μm at 60 dB. Therefore, since the friction is increased by having the surface roughness of about the sound movement distance, the range of the surface roughness Ra and the range of the average particle diameter of protruding portions described above are preferable.

Here, from the viewpoint of the visibility of the through-hole, the average opening diameter of a plurality of through-holes formed in the sheet member is preferably 50 μm or less, and more preferably 20 μm or less.

In a case where the sheet member having micro through-holes, which is used in the soundproof structure body according to the embodiment of the present invention, is disposed on the wall surface or a visible place, a situation in which the through-holes themselves are visible is not preferable in terms of design. Since a person is concerned that there are holes as an appearance, it is desirable that through-holes are difficult to be seen. It becomes a problem in a case where through-holes are visible at various places such as a soundproof wall inside the room, an articulating wall, a soundproof panel, an articulating panel, and an exterior part of a machine.

First, the visibility of one through-hole will be examined.

Hereinafter, a case where the resolution of human eyes is visual acuity 1 will be discussed.

The definition of visual acuity 1 is to see the one minute angle decomposed. This indicates that 87 μm can be decomposed at a distance of 30 cm. The relationship between the distance and the resolution in the case of visual acuity 1 is shown in Fig. 7.

Whether or not the through-hole is visible is strongly relevant to the visual acuity. Whether a blank space between two points and/or two line segments can be seen depends on the resolution, as the visual acuity test is performed by recognizing the gap portion of the Landolt's ring. That is, in the case of a through-hole having an opening diameter less than the resolution of the eye, the distance between the edges of the through-hole cannot be decomposed by the eyes. On the other hand, it is possible to recognize the shape of a through-hole having an opening diameter equal to or greater than the resolution of the eye.

In the case of visual acuity 1, a through-hole of 100 μm can be decomposed from a distance of 35 cm. However, a through-hole of 50 μm and a through-hole of 20 μm cannot be decomposed at a distance longer than 18 cm and 7 cm, respectively. Therefore, in a case where a person is concerned since a through-hole of 100 μm can be recognized, a through-hole of 20 μm can be used since the through-hole of 20 μm cannot be recognized unless the distance is an extremely short distance of 1/5. Therefore, a small opening diameter is advantageous to cover the through-hole. In the case of using the soundproof structure body in a wall or in a car, the distance from the observer is generally several tens of centimeters. In this case, an opening diameter of about 100 μm is the boundary therebetween.

Next, light scattering caused by through-holes will be discussed. Since the wavelength of visible light is about 400 nm to 800 nm (0.4 μm to 0.8 μm), the opening diameter of several tens of micrometers discussed in the present invention is sufficiently larger than the optical wavelength. In this case, the cross-sectional area of scattering in visible light (amount indicating how strongly an object is scattered, the unit is an area) almost matches the geometrical cross-sectional area, that is, the cross-sectional area of the through-hole in this case. That is, it can be seen that the magnitude at which visible light is scattered is proportional to the square of the radius (half of the circle equivalent diameter) of the through-hole. Therefore, as the size of the through-hole increases, the scattering intensity of the light increases with the square of the radius of the through-hole. Since the ease of viewing of a single through-hole is proportional to the amount of scattering of light, visibility in a case where each one of through-holes is large even in a case where the average opening ratio is the same.

Finally, a difference between a random arrangement having no periodicity for the arrangement of through-holes and a periodic arrangement will be discussed. In the periodic arrangement, a light diffraction phenomenon occurs according to the period. In this case, in a case where transmitted white light, reflected white light, broad spectrum light, and the like hit, the color appears variously (for example, light diffracts and the color appear to be misaligned like a rainbow or the color is strongly reflected at a specific angle).

On the other hand, in the case of a random arrangement, the above-described diffraction phenomena do not occur.

The material of the sheet member is not limited, and various metals such as aluminum, titanium, nickel, permalloy, 42 alloy, kovar, nichrome, copper, beryllium, phosphor bronze, brass, nickel silver, tin, zinc, iron, tantalum, niobium, molybdenum, zirconium, gold, silver, platinum, palladium, steel, tungsten, lead, and iridium; resin materials such as polyethylene terephthalate (PET), triacetyl cellulose (TAC), polyvinylidene chloride (PVDC), polyethylene (PE), polyvinyl chloride (PVC), polymethylpentene (PMP), cycloolefin polymer (COP), zeonore, polycarbonate, polyethylene naphthalate (PEN), polypropylene (PP), polystyrene (PS), polyarylate (PAR), aramid, polyphenylene sulfide (PPS), polyethersulfone (PES), nylon, polyester (PEs), cyclic olefin copolymer (COC), diacetylcellulose, nitrocellulose, cellulose derivative, polyamide, polyamideimide, polyoxymethylene (POM), polyetherimide (PEI), polyrotaxane (slide ring material and the like), polyimide, and the like can be used. In addition, glass materials, such as thin film glass, and fiber reinforced plastic materials, such as carbon fiber reinforced plastics (CFRP) and glass fiber reinforced plastics (GFRP), can also be used. In addition, natural rubber, chloroprene rubber, butyl rubber, EPDM, silicone rubber, and the like, and rubbers containing these crosslinked structures can be used.

From viewpoints that due to the high Young's modulus, vibration hardly occur even though the thickness is small, the sound absorption effect is easily obtained by friction in the micro through-hole, durability to temperature, humidity, and environment is high, dust hardly scatters, and the like, it is preferable to use the metal materials. Among these, from viewpoints of lightweight, easily forming micro through-holes by etching, availability, cost, and the like, aluminum is preferably used.

In the case of using a metal material, metal plating may be performed on the surface from the viewpoint of suppression of rust and the like.

In addition, by performing the metal plating on at least the inner surface of the through-hole, the average opening diameter of the through-holes may be adjusted to a smaller range.

By using a material that is conductive and is not charged, such as a metal material, as the material of the sheet member, fine dirt, dust, and the like are not attracted to the film by static electricity. Therefore, it is possible to suppress the sound absorption performance from lowering due to clogging of the through-hole of the sheet member with dirt, dust, and the like.

In addition, heat resistance can be improved by using a metal material as the material of the sheet member. In addition, ozone resistance can be improved.

In a case where a metal material is used as the sheet member, it is possible to shield electric waves.

The metal material has a high reflectance with respect to radiant heat due to far infrared rays. Accordingly, in a case where the conductive metal material is used as a material of the sheet member, the metal material also functions as a heat insulating material for preventing heat transfer due to radiant heat. In this case, a plurality of through-holes are formed in the sheet member, but the sheet member functions as a reflecting film since the opening diameter of the through-hole is small.

It is known that a structure in which a plurality of micro through-holes are opened in a metal functions as a high pass filter of a frequency. For example, a window with a metal mesh in a microwave oven has a property of transmitting visible high frequency light while shielding microwaves used for the microwave oven. In this case, assuming that the hole diameter of the through-hole is $\phi$ and the wavelength of the electromagnetic wave is $\lambda$, the window functions as a filter that does not transmit a long wavelength component satisfying the relationship of $\phi < \lambda$ and transmits a short wavelength component satisfying the relationship of $\phi>\lambda$.

Here, the response to radiant heat is considered. Radiant heat is a heat transfer mechanism in which far infrared rays are radiated from an object according to the object temperature and transmitted to other objects. From the Wien's radiation law, it is known that radiant heat in an environment of about room temperature is distributed around $\lambda$ = 10 $\mu$m and up to 3 times the wavelength (up to 30 $\mu$m) on the longer wavelength side contributes effectively to transferring heat by radiation. Considering the relationship between the hole diameter $\phi$ of the high pass filter and the wavelength $\lambda$, the component of $\lambda$ > 30 $\mu$m (the component longer than the wavelength in the far infrared region) is strongly shielded in the case of $\phi$ = 30 $\mu$m, while the relationship of $\phi > \lambda$ is satisfied and radiant heat propagates through the through-hole in the case of $\phi$ = 50 $\mu$m. That is, since the hole diameter $\phi$ is several tens of micrometers, the propagation performance of radiant heat greatly changes depending on the difference in hole diameter $\phi$, and it can be seen that the smaller the hole diameter $\phi$, that is, the smaller the average opening diameter, the more it functions as a radiant heat cut filter. Therefore, from the viewpoint of a heat insulating material for preventing heat transfer due to radiant heat, the average opening diameter of the through-holes formed in the sheet member is preferably 30 $\mu$m or less.

On the other hand, in a case where transparency is required for the entire soundproof structure body, a resin material or a glass material that can be made transparent can be used. For example, a PET film has a relatively high Young's modulus among resin materials, is easily available, and has high transparency. Therefore, the PET film can be used as a soundproof structure body suitable for forming through-holes.

It is possible to improve the durability of the sheet member by appropriately performing surface treatment (plating treatment, oxide coating treatment, surface coating (fluorine, ceramic), and the like) according to the material of the sheet member. For example, in a case where aluminum is used as a material of the sheet member, it is possible to form an oxide coating film on the surface by performing alumite treatment (anodic oxidation treatment) or boehmite treatment. By forming an oxide coating film on the surface, it is possible to improve corrosion resistance, abrasion resistance, scratch resistance, and the like. In addition, by adjusting the treatment time to adjust the thickness of the oxide coating film, it is possible to adjust the color by optical interference.

Coloring, decoration, ornament, designing, and the like can be applied to the sheet member. As a method of applying these, a suitable method may be selected according to the material of the sheet member and the state of the surface treatment. For example, printing using an ink jet method or the like can be used. In addition, in a case where aluminum is used as a material of the sheet member, highly durable coloring can be performed by performing color alumite treatment. The color alumite treatment is a treatment in which alumite treatment is performed on the surface and then a dye is penetrated onto the surface and then the surface is sealed. In this manner, it is possible to obtain a sheet member with high designability such as the presence or absence of metal gloss and color. In addition, by performing alumite treatment after forming through-holes, an anodic oxide coating film is formed only in the aluminum portion. Therefore, decorations can be made without the dye covering the through-holes and reducing the sound absorption characteristics.

In combination with the alumite treatment, various coloring and design can be applied.

<Aluminum base material>

The aluminum base material used as a sheet member is not particularly limited. For example, known aluminum base materials, such as Alloy Nos. 1085, 1N30, and 3003 described in JIS standard H4000, can be used. The aluminum base material is an alloy plate containing aluminum as a main component and containing a small amount of different element.

The thickness of the aluminum base material is not particularly limited, and is preferably 5 μm to 1,000 μm, more preferably 7 μm to 200 μm, and particularly preferably 10 μm to 100 μm.

Hereinafter, the physical properties or characteristics of a structural member that can be combined with a soundproof member having the soundproof structure body according to the embodiment of the present invention will be described.

[Flame retardance]

In a case of using a soundproof member having the soundproof structure body according to the embodiment of the present invention as a soundproof material in a building or an apparatus, flame retardancy is required.

Therefore, the sheet member is preferably flame retardant. In a case where resin is used as the sheet member, for example, Lumirror (registered trademark) nonhalogen flame-retardant type ZV series (manufactured by Toray Industries, Inc.) that is a flame-retardant PET film, Teijin Tetoron (registered trademark) UF (manufactured by Teijin Ltd.), and/or Dialamy (registered trademark) (manufactured by Mitsubishi Plastics Co., Ltd.) that is a flame-retardant polyester film may be used.

Flame retardancy can also be given by using metal materials, such as aluminum, nickel, tungsten, and copper.

[Heat resistance]

There is a concern that the soundproofing characteristics may be changed due to the expansion and contraction of the structural member of the soundproof structure body according to the embodiment of the present invention due to an environmental temperature change. Therefore, the material forming the structural member is preferably a heat resistant material, particularly a material having low heat shrinkage.

In the case of using resin as a sheet member, for example, Teijin Tetoron (registered trademark) film SLA (manufactured by Teijin DuPont Film), PEN film Teonex (registered trademark) (manufactured by Teijin DuPont), and/or Lumirror (registered trademark) off-anneal low shrinkage type (manufactured by Toray Industries, Inc.) are preferably used. In general, it is preferable to use a metal film, such as aluminum having a smaller thermal expansion factor than a plastic material.

[Weather resistance and light resistance]

In a case where the soundproof member having the soundproof structure body according to the embodiment of the present invention is disposed outdoors or in a place where light is incident, the weather resistance of the structural member becomes a problem.

Therefore, in a case where resin is used as a sheet member, it is preferable to use a weather-resistant film, such as a special polyolefin film (ARTPLY (registered trademark) (manufactured by Mitsubishi Plastics Inc.)), an acrylic resin film (ACRYPRENE (manufactured by Mitsubishi Rayon Co.)), and/or Scotch Calfilm (trademark) (manufactured by 3M Co.).

In addition, light resistance to ultraviolet light and the like can also be given by using a metal material, such as aluminum.

Regarding moisture resistance as well, it is preferable to appropriately select a sheet member having high moisture resistance. Regarding water absorption and chemical resistance as well, it is preferable to appropriately select a sheet member.

[Dust]

During long-term use, dust may adhere to the sheet member surface to affect the soundproofing characteristics of the soundproof structure body according to the embodiment of the present invention. Therefore, it is preferable to prevent the adhesion of dust or to remove adhering dust.

As a method of preventing dust, it is preferable to use the sheet member formed of a material to which dust is hard to adhere. For example, by using a conductive film (Flecria (registered trademark) (manufactured by TDK Corporation) and/or NCF (Nagaoka Sangyou Co., Ltd.)) so that the sheet member is not charged, it is possible to prevent adhesion of dust due to charging. By selecting a sheet member having conductivity like a metal material such as aluminum, it is possible to prevent the adhesion of dust due to static electricity.

It is also possible to suppress the adhesion of dust by using a fluororesin film (Dynoch Film (trademark) (manufactured by 3M Co.)), and/or a hydrophilic film (Miraclain (manufactured by Lifegard Co.)), RIVEX (manufactured by Riken Technology Inc.) and/or SH2CLHF (manufactured by 3M Co.)). By using a photocatalytic film (Raceline (manufactured by Kimoto Corporation)), contamination of the sheet member can also be prevented. A similar effect can also be obtained by applying a spray having the conductivity, hydrophilic property and/or photocatalytic property and/or a spray containing a fluorine compound to the sheet member.

In addition, by forming a hydrophilic surface including the inside of holes by silica coating and forming a hydrophobic surface by fluorine coating and using the hydrophilic surface and the hydrophobic surface at the same time, it is possible to realize anti-contamination coating by which both hydrophilic dirt and hydrophobic dirt are easily peeled off.

In addition to using the special materials described above, it is also possible to prevent contamination by providing a cover on the sheet member. As the cover, it is possible to use a thin film material (Saran Wrap (registered trademark) or the like), a mesh (formed of metal, plastic, or the like) having a mesh size not allowing dust to pass therethrough, a nonwoven fabric, a urethane, an airgel, a porous film, and the like.

In a case where a particularly thin film material or the like is used as the cover, the effect of the through-hole of the present invention is maintained by making the thin film material or the like away from the sheet member 12 without attaching the thin film material or the like to the sheet member, which is desirable. In addition, in a case where the thin film material is fixed with the thin film material stretched in order to make sound pass through the thin film material without strong film vibration, film vibration tends to occur. For this reason, it is desirable that the thin film material is loosely supported.

As a method of removing adhering dust, it is possible to remove dust by emitting a sound to the sheet member so that the sheet member strongly vibrates. The same effect can be obtained even in a case where a blower or wiping is used.

[Wind pressure]

In a case where a strong wind hits the sheet member, the sheet member may be pressed to change the resonance frequency. Therefore, by covering the sheet member with nonwoven fabric, urethane, and/or a film, the influence of wind can be suppressed.

[Method of manufacturing a sheet member]

Next, a method of manufacturing a sheet member used in the soundproof structure body according to the embodiment of the present invention will be described with a case using an aluminum base material as an example.

The method of manufacturing a sheet member using an aluminum base material has a coating film forming step for forming a coating film containing aluminum hydroxide as a main component on the surface of the aluminum base material, a through-hole forming step for forming a through-hole by performing through-hole forming treatment after the coating film forming step, and a coating film removing step for removing the aluminum hydroxide coating film after the through-hole forming step.

By having the coating film forming step, the through-hole forming step, and the coating film removing step, it is possible to suitably form through-holes having an average opening diameter of 1 $\mu$m or more and 250 $\mu$m or less.

Next, each step of the method of manufacturing a sheet member will be described with reference to Figs. 8 to 11, and then each step will be described in detail.

Figs. 8 to 11 are schematic cross-sectional views showing an example of a suitable embodiment of the method of manufacturing a sheet member using an aluminum base material.

As shown in Figs. 8 to 11, the method of manufacturing a sheet member is a manufacturing method having a coating film forming step in which coating film forming treatment is performed on one main surface of an aluminum base material 11 to form an aluminum hydroxide coating film 13 (Figs. 8 and 9), a through-hole forming step in which the through-holes 14 are formed by performing electrolytic dissolution treatment after the coating film forming step so that through-holes are formed in the aluminum base material 11 and the aluminum hydroxide coating film 13 (Figs. 9 and 10), and a coating film removing step in which the aluminum hydroxide coating film 13 is removed after the through-hole forming step to manufacture the sheet member 12 having the through-holes 14 (Figs. 10 and 11).

In the method of manufacturing a sheet member, it is preferable to have a surface roughening treatment step for roughening the surface of the sheet member 12 by performing electrochemical surface roughening treatment on the sheet member 12 having the through-holes 14 after the coating film removing step.

Small holes are easily formed in the aluminum hydroxide coating film. Therefore, by forming through-holes by performing electrolytic dissolution treatment in the through-hole forming step after the coating film forming step for forming the aluminum hydroxide coating film, it is possible to form through-holes having an average opening diameter of 1 $\mu$m or more and less than 250 $\mu$m.

[Coating film forming step]

In the present invention, the coating film forming step included in the method of manufacturing a sheet member is a step of forming an aluminum hydroxide coating film by performing coating film forming treatment on the surface of the aluminum base material.

<Coating film forming treatment>

The above-described coating film forming treatment is not particularly limited. For example, the same treatment as the conventionally known aluminum hydroxide coating film forming treatment can be performed.

As the coating film forming treatment, for example, conditions or apparatuses described in the paragraphs of <0013> to <0026> of JP2011-201123A can be appropriately adopted.

In the present invention, the conditions of the coating film forming treatment change according to the electrolyte to be used and accordingly cannot be unconditionally determined. In general, however, it is appropriate that the electrolyte concentration is 1% to 80% by mass, the liquid temperature is 5°C to 70°C, the current density is 0.5 to 60 A/dm$^2$, the voltage is 1 to 100 V, and the electrolysis time is 1 second to 20 minutes, and these are adjusted so as to obtain a desired amount of coating film.

In the present invention, it is preferable to perform electrochemical treatment using nitric acid, hydrochloric acid, sulfuric acid, phosphoric acid, oxalic acid, or mixed acids of two or more of these acids as an electrolyte.

In the case of performing electrochemical treatment in the electrolyte containing nitric acid and hydrochloric acid, a direct current may be applied between the aluminum base material and the counter electrode, or an alternating current may be applied. In the case of applying a direct current to the aluminum base material, the current density is preferably 1 to 60 A/dm$^2$, and more preferably 5 to 50 A/dm$^2$. In the case of continuously performing the electrochemical treatment, it is preferable to perform the electrochemical treatment using a liquid power supply method for supplying electric power to the aluminum base material through the electrolyte.

In the present invention, the amount of the aluminum hydroxide coating film formed by the coating film forming treatment is preferably 0.05 to 50 g/m$^2$, and more preferably 0.1 to 10 g/m$^2$.

[Through-hole forming step]

The through-hole forming step is a step of forming through-holes by performing electrolytic dissolution treatment after the coating film forming step.

<Electrolytic dissolution treatment>

The electrolytic dissolution treatment is not particularly limited, and a direct current or an alternating current may be used, and an acidic solution may be used as the electrolyte. Among these, it is preferable to perform electrochemical treatment using at least one acid of nitric acid or hydrochloric acid, and it is more preferable to perform electrochemical treatment using mixed acids of at least one or more of sulfuric acid, phosphoric acid, or oxalic acid in addition to these acids.

In the present invention, as an acidic solution that is an electrolyte, in addition to the above-mentioned acids, electrolytes described in US4671859B, US4661219B, US4618405B, US4600482B, US4566960B, US4566958B, US4566959B, US4416972B, US4374710B, US4336113B, US4184932B, and the like can also be used.

The concentration of the acidic solution is preferably 0.1% to 2.5% by mass, and particularly preferably 0.2% to 2.0% by mass. The solution temperature of the acidic solution is preferably 20°C to 80°C, more preferably 30°C to 60°C.

As the above-described acid based aqueous solution, it is possible to use an aqueous solution of acid having a concentration of 1 to 100 g/L in which at least one of a nitric acid compound having nitrate ions, such as aluminum nitrate, sodium nitrate, and ammonium nitrate, a hydrochloric acid compound having hydrochloric acid ions, such as aluminum chloride, sodium chloride, and ammonium chloride, or a sulfuric acid compound having sulfate ions, such as aluminum sulfate, sodium sulfate, and ammonium sulfate, is added in a range of 1 g/L to saturation.

In addition, metals contained in aluminum alloys, such as iron, copper, manganese, nickel, titanium, magnesium, and silica, may be dissolved in the above-described acid based aqueous solution. Preferably, a solution obtained by adding aluminum chloride, aluminum nitrate, aluminum sulfate, or the like to an aqueous solution having an acid concentration of 0.1% to 2% by mass so that the concentration of aluminum ions is 1 to 100 g/L is preferably used.

In the electrochemical dissolution treatment, a direct current is mainly used. However, in the case of using an alternating current, the AC power supply wave is not particularly limited, and a sine wave, a rectangular wave, a trapezoidal wave, a triangular wave, and the like are used. Among these, a rectangular wave or a trapezoidal wave is preferable, and a trapezoidal wave is particularly preferable.

(Nitric acid electrolysis)

In the present invention, it is possible to easily form through-holes having an average opening diameter of 1 μm or more and 250 μm or less by electrochemical dissolution treatment using a nitric acid based electrolyte (hereinafter, also abbreviated as "nitric acid dissolution treatment").

Here, for the reason that it is easy to control the melting point of the through-hole formation, the nitric acid dissolution treatment is preferably an electrolytic treatment performed under the conditions that a direct current is used and the average current density is 5 $A/dm^2$ or more and the electric quantity is 50 $C/dm^2$ or more. The average current density is preferably 100 $A/dm^2$ or less, and the electric quantity is preferably 10,000 $C/dm^2$ or less.

The concentration or temperature of the electrolyte in the nitric acid electrolysis is not particularly limited, and electrolysis can be performed at 30°C to 60°C using a nitric acid electrolyte having a high concentration, for example, a nitric acid concentration of 15% to 35% by mass, or electrolysis can be performed at a high temperature, for example, 80°C or more, using a nitric acid electrolyte having a nitric acid concentration of 0.7% to 2% by mass.

In addition, electrolysis can be performed by using an electrolyte in which at least one of sulfuric acid, oxalic acid, or phosphoric acid having a concentration of 0.1% to 50% by mass is mixed in the nitric acid electrolyte.

(Hydrochloric acid electrolysis)

In the present invention, it is also possible to easily form through-holes having an average opening diameter of 1 μm or more and less than 250 μm by electrochemical dissolution treatment using a hydrochloric acid based electrolyte (hereinafter, also abbreviated as "hydrochloric acid dissolution treatment").

Here, for the reason that it is easy to control the melting point of the through-hole formation, the hydrochloric acid dissolution treatment is preferably an electrolytic treatment performed under the conditions that a direct current is used and the average current density is 5 $A/dm^2$ or more and the electric quantity is 50 $C/dm^2$ or more. The average current density is preferably 100 $A/dm^2$ or less, and the electric quantity is preferably 10,000 $C/dm^2$ or less.

The concentration or temperature of the electrolyte in the hydrochloric acid electrolysis is not particularly limited, and electrolysis can be performed at 30°C to 60°C using a hydrochloric acid electrolyte having a high concentration, for example, a hydrochloric acid concentration of 10% to 35% by mass, or electrolysis can be performed at a high temperature, for example, 80°C or more, using a hydrochloric acid electrolyte having a hydrochloric acid concentration of 0.7% to 2% by mass.

In addition, electrolysis can be performed by using an electrolyte in which at least one of sulfuric acid, oxalic acid, or phosphoric acid having a concentration of 0.1% to 50% by mass is mixed in the hydrochloric acid electrolyte.

[Coating film removing step]

The film removing step is a step of performing chemical dissolution treatment to remove the aluminum hydroxide coating film.

In the coating film removing step, for example, the aluminum hydroxide coating film can be removed by performing an acid etching treatment or an alkali etching treatment to be described later.

<Acid etching treatment>

The above-described dissolution treatment is a treatment of dissolving the aluminum hydroxide coating film using a solution that preferentially dissolves aluminum hydroxide rather than aluminum (hereinafter, referred to as "aluminum hydroxide solution").

Here, as the aluminum hydroxide solution, for example, an aqueous solution containing at least one selected from the group consisting of nitric acid, hydrochloric acid, sulfuric acid, phosphoric acid, oxalic acid, a chromium compound, a zirconium compound, a titanium compound, a lithium salt, a cerium salt, a magnesium salt, sodium silicofluoride, zinc fluoride, a manganese compound, a molybdenum compound, a magnesium compound, a barium compound, and a halogen alone is preferable.

Specifically, examples of the chromium compound include chromium oxide (III) and chromium anhydride (VI) acid.

Examples of the zirconium based compound include ammonium zirconium fluoride, zirconium fluoride, and zirconium chloride.

Examples of the titanium compound include titanium oxide and titanium sulfide.

Examples of the lithium salt include lithium fluoride and lithium chloride.

Examples of the cerium salt include cerium fluoride and cerium chloride.

Examples of the magnesium salt include magnesium sulfide.

Examples of the manganese compound include sodium permanganate and calcium permanganate.

Examples of the molybdenum compound include sodium molybdate.

Examples of the magnesium compound include magnesium fluoride pentahydrate.

Examples of the barium compound include barium oxide, barium acetate, barium carbonate, barium chlorate, barium chloride, barium fluoride, barium iodide, barium lactate, barium oxalate, barium oxalate, barium perchlorate, barium selenate, selenite barium, barium stearate, barium sulfite, barium titanate, barium hydroxide, barium nitrate, and hydrates thereof.

Among the barium compounds, barium oxide, barium acetate, and barium carbonate are preferable, and barium oxide is particularly preferable.

Examples of halogen alone include chlorine, fluorine, and bromine.

Among these, it is preferable that the aluminum hydroxide solution is an aqueous solution containing an acid, and examples of the acid include nitric acid, hydrochloric acid, sulfuric acid, phosphoric acid, and oxalic acid and a mixture of two or more acids may be used.

The acid concentration is preferably 0.01 mol/L or more, more preferably 0.05 mol/L or more, and even more preferably 0.1 mol/L or more. There is no particular upper limit, but in general it is preferably 10 mol/L or less, and more preferably 5 mol/L or less.

The dissolution treatment is performed by bringing the aluminum base material on which the aluminum hydroxide coating film is formed into contact with the solution described above. The method of contacting is not particularly limited, and examples thereof include an immersion method and a spray method. Among these, the immersion method is preferable.

The immersion treatment is a treatment of immersing an aluminum base material on which an aluminum hydroxide coating film is formed into the solution described above. Stirring during immersion treatment is preferably performed since uniform treatment is performed.

The immersion treatment time is preferably 10 minutes or more, more preferably 1 hour or more, and even more preferably 3 hours or more or 5 hours or more.

<Alkali etching treatment>

The alkali etching treatment is a treatment for dissolving the surface layer by bringing the aluminum hydroxide coating film into contact with an alkali solution.

Examples of the alkali used in the alkali solution include caustic alkali and alkali metal salts. Specifically, examples of the caustic alkali include sodium hydroxide (caustic soda) and caustic potash. Examples of the alkali metal salt include: alkali metal silicates such as sodium metasilicate, sodium silicate, potassium metasilicate, and potassium silicate; alkali metal carbonates such as sodium carbonate and potassium carbonate; alkali metal aluminates such as sodium aluminate and potassium aluminate; alkali metal aldonic acid salts such as sodium gluconate and potassium gluconate; and alkali metal hydrogenphosphate such as secondary sodium phosphate, secondary potassium phosphate, tertiary sodium phosphate, and tertiary potassium phosphate. Among these, a solution containing caustic alkali and a solution containing both caustic alkali and alkali metal aluminate are preferable from the viewpoint of high etching speed and low cost. In particular, an aqueous solution of sodium hydroxide is preferred.

The concentration of the alkali solution is preferably 0.1% to 50% by mass, and more preferably 0.2% to 10% by mass. In a case where aluminum ions are dissolved in the alkali solution, the concentration of aluminum ions is preferably 0.01% to 10% by mass, and more preferably 0.1% to 3% by mass. The temperature of the alkali solution is preferably 10°C to 90°C. The treatment time is preferably 1 to 120 seconds.

Examples of the method of bringing the aluminum hydroxide coating film into contact with the alkali solution include a method in which an aluminum base material having an aluminum hydroxide coating film formed thereon is made to pass through a tank containing an alkali solution, a method in which an aluminum base material having an aluminum hydroxide coating film formed thereon is immersed in a tank containing an alkali solution, and a method in which an alkali solution is sprayed onto the surface (aluminum hydroxide coating film) of an aluminum base material on which an aluminum hydroxide coating film is formed.

[Surface roughening treatment step]

In the present invention, any surface roughening treatment step which may be included in the method of manufacturing a sheet member is a step of roughening the front surface or the back surface of the aluminum base material by performing electrochemical roughening treatment (hereinafter, also abbreviated as "electrolytic surface roughening treatment") on the aluminum base material from which the aluminum hydroxide coating film has been removed.

In the embodiment described above, the surface roughening treatment is performed after forming through-holes. However, the present invention is not limited thereto, and through-holes may be formed after the surface roughening treatment.

In the present invention, the surface can be easily roughened by electrochemical surface roughening treatment (hereinafter, also abbreviated as "nitric acid electrolysis") using a nitric acid based electrolyte.

Alternatively, the surface can also be roughened by electrochemical surface roughening treatment (hereinafter, also abbreviated as "hydrochloric acid electrolysis") using a hydrochloric acid based electrolyte.

[Metal coating step]

In the present invention, for the reason that the average opening diameter of the through-hole formed by the above-described electrolytic dissolution treatment can be adjusted to a small range of about 1 μm to 20 μm, it is preferable that the method of manufacturing a sheet member has a metal coating step for coating a part or entirety of the surface of the aluminum base material including at least the inner wall of the through-hole with a metal other than aluminum after the coating film removing step described above.

Here, "coating a part or entirety of the surface of the aluminum base material including at least the inner wall of the through-hole with a metal other than aluminum" means that at least the inner wall of the through-hole in the entire surface of the aluminum base material including the inner wall of the through-hole is coated. The surface other than the inner wall may not be coated, and a part or entirety of the surface may be coated.

In the metal coating step, for example, substitution treatment and plating treatment to be described later are performed on the aluminum base material having through-holes.

<Substitution treatment>

The above-described substitution treatment is a treatment for performing substitution plating of zinc or zinc alloy on a part or entirety of the surface of the aluminum base material including at least the inner wall of the through-hole.

Examples of the substitution plating solution include a mixed solution of sodium hydroxide of 120 g/L, zinc oxide of 20 g/L, crystalline ferric chloride of 2 g/L, Rossel salt of 50 g/L, and sodium nitrate of 1 g/L.

Commercially available Zn or Zn alloy plating solution may be used. For example, substars Zn-1, Zn-2, Zn-3, Zn-8, Zn-10, Zn-111, Zn -222, and Zn-291 manufactured by Okuno Pharmaceutical Industries can be used.

The time of immersion of the aluminum base material in such a substitution plating solution is preferably 15 seconds to 40 seconds, and the immersion temperature is preferably 20°C to 50°C.

<Plating treatment>

In a case where zinc or zinc alloy is substituted for plating on the surface of the aluminum base material by the substitution treatment described above to form a zinc coating film, for example, it is preferable to perform plating treatment in which the zinc coating film is substituted to nickel by electrolytic plating to be described later and then various metals are precipitated by electrolytic plating to be described later.

(Electroless plating treatment)

As a nickel plating solution used for the electroless plating treatment, commercially available products can be widely used. For example, an aqueous solution containing nickel sulfate of 30 g/L, sodium hypophosphite of 20 g/L, and ammonium citrate of 50 g/L can be mentioned.

In addition, examples of the nickel alloy plating solution include an Ni-P alloy plating solution in which a phosphorus compound is used as a reducing agent or an Ni-B plating solution in which a boron compound is used as a reducing agent.

The immersion time in such a nickel plating solution or nickel alloy plating solution is preferably 15 seconds to 10 minutes, and the immersion temperature is preferably 30°C to 90°C.

(Electrolytic plating treatment)

As a plating solution in the case of electroplating Cu as an example of electrolytic plating treatment, for example, a plating solution obtained by adding sulfuric acid Cu of 60 to 110 g/L, sulfuric acid of 160 to 200 g/L, and hydrochloric acid of 0.1 to 0.15 mL/L to pure water and adding Toprutina SF base WR of 1.5 to 5.0 mL/L, Toprutina SF-B of 0.5 to 2.0 mL/L, and Toprutina SF leveler of 3.0 to 10 mL/L, which are manufactured by Okuno Pharmaceutical Co., Ltd., as additives can be mentioned.

The immersion time in such a copper plating solution depends on the thickness of the Cu film and accordingly is not particularly limited. For example, in a case where a Cu film having a thickness of 2 μm is applied, immersion for about 5 minutes at a current density of 2 A/dm$^2$ is preferable, and the immersion temperature is preferably 20°C to 30°C.

[Washing treatment]

In the present invention, it is preferable to perform washing after the end of each treatment step described above. Pure water, well water, tap water, and the like can be used for washing. A nipping apparatus may be used to prevent the inflow of treatment solution to the next step.

Such a soundproof structure body may be manufactured by using a cut sheet-shaped aluminum base material, or may be manufactured by roll-to-roll (hereinafter, also referred to as RtoR).

As is well known, RtoR is a manufacturing method in which a raw material is pulled out from a roll on which a long raw material is wound, various treatments such as surface treatment are performed while transporting the raw material in the longitudinal direction, and the treated raw material is wound onto the roll again.

In the manufacturing method of forming through-holes in the aluminum base material as described above, it is possible to easily and efficiently form a through-hole of about 20 μm by RtoR.

The method of forming through-holes is not limited to the method described above, and the through-holes may be formed by using a known method depending on a material for forming the sheet member, the thickness or the like.

For example, as machining using a tool, micro holes can be formed by cutting machining by drilling, electrical discharge machining, electrolytic machining, die-cut machining or punching. In addition, through-holes having various shapes can be formed using a laser beam machine. Micro through-holes can be formed in ceramic or the like by ultrasonic machining.

Furthermore, as a machining method using a mask, the through-holes can be formed by an etching method such as photochemical etching, a chemical method or a physical method such as electrolytic machining, or blast machining. The through-holes can also be formed by the electroforming method.

The soundproof structure body according to the embodiment of the present invention is used in a copying machine, a blower, air conditioning equipment, a ventilator, a pump, a generator, a duct, industrial equipment including various kinds of manufacturing equipment capable of emitting sound such as a coating machine, a rotary machine, and a conveyor machine, transportation equipment such as an automobile, a train, and aircraft, general household equipment such as a refrigerator, a washing machine, a dryer, a television, a copying machine, a microwave oven, a game machine, an air conditioner, a fan, a PC, a vacuum cleaner, an air purifier, and a ventilator, and the like, and is appropriately disposed at a position through which sound generated from a noise source passes in various apparatuses.

The soundproof structure body according to the embodiment of the present invention is not limited to being used in various apparatuses, such as industrial equipment, transportation equipment, and general household equipment described above, and can also be used in a fixed wall, such as a fixed partition structure (partition) that is disposed in a room of a building to partition the inside of the room, and a movable wall, such as a movable partition structure (partition) that is disposed in a room of a building to partition the inside of the room.

The soundproof structure body according to the embodiment of the present invention can be used, for example, in spaces where dust and dirt are disliked such as meeting rooms, lecture rooms, speech halls, music halls, other rooms, ceilings, vehicle interiors (cars, trains, airplanes), clean rooms, and the like, and spaces where durability is required and replacement is inconvenient such as the inside of ceilings or the inside of walls.

In addition, by using the soundproof structure body according to the embodiment of the present invention as a partition, it is possible to suitably shield sound between the partitioned spaces. In particular, in the case of a movable partition, the thin and light structure according to the embodiment of the present invention is advantageous in that the structure is easy to carry.

In addition, the soundproof structure body according to the embodiment of the present invention can also be used as a cage that surrounds an apparatus that becomes a noise source, for example, an air conditioner outdoor unit or a water heater, for noise prevention. By surrounding the noise source with the member, it is possible to absorb sound while securing heat dissipation and air permeability and accordingly to prevent noise.

In addition, the soundproof structure body according to the embodiment of the present invention may be used for a pet breeding cage. By applying the member according to the embodiment of the present invention to the entire pet breeding cage or a part of the pet breeding cage, for example, by replacing one surface of the pet cage with this member, it is possible to obtain the pet cage that is lightweight and has a sound absorption effect. By using this cage, it is possible to protect the pet in the cage from outside noise, and it is possible to suppress the crying sound of the pet in the cage from leaking to the outside.

In addition to those described above, the soundproof structure body according to the embodiment of the present invention can be used as the following soundproof members.

For example, as soundproof members having the soundproof structure body according to the embodiment of the present invention, it is possible to mention: a soundproof member for building materials (soundproof member used as building materials); a soundproof member for air conditioning equipment (soundproof member installed in ventilation openings, air conditioning ducts, and the like to prevent external noise); a soundproof member for external opening portion (soundproof member installed in the window of a room to prevent noise from indoor or outdoor); a soundproof member for ceiling (soundproof member installed on the ceiling of a room to control the sound in the room); a soundproof member for floor (soundproof member installed on the floor to control the sound in the room); a soundproof member for internal opening portion (soundproof member installed in a portion of the inside door or sliding door to prevent noise from each room); a soundproof member for toilet (soundproof member installed in a toilet or a door (indoor and outdoor) portion to prevent noise from the toilet); a soundproof member for balcony (soundproof member installed on the balcony to prevent noise from the balcony or the adjacent balcony); an indoor sound adjusting member (soundproof member for controlling the sound of the room); a simple soundproof chamber member (soundproof member that can be easily assembled and can be easily moved); a soundproof chamber member for pet (soundproof member that surrounds a pet's room to prevent noise); amusement facilities (soundproof member installed in a game centers, a sports center, a concert hall, and a movie theater); a soundproof member for temporary enclosure for construction site (soundproof member to prevent leakage of noise by covering the construction site); and a soundproof member for tunnel (soundproof member installed in a tunnel to prevent noise leaking to the inside and outside the tunnel).

## Examples

Hereinafter, the present invention will be described in more detail by way of examples. Materials, the amount of use, ratios, processing content, processing procedures, and the like shown in the following examples can be appropriately changed without departing from the gist of the present invention. Therefore, the range of the present invention should not be interpreted restrictively by the following examples.

<Manufacturing of a sheet member>

A surface of an aluminum base material (JIS H-4160, alloy number: 1N30-H, aluminum purity: 99.30%) having an average thickness of 20 μm and a size of 210 mm × 297 mm (A4 size) is subjected to the following treatment, and a sheet member A was manufactured.

(a1) Aluminum hydroxide coating film formation treatment (film formation step)

The aluminum base material was subjected to electrolytic treatment for 20 seconds as a cathode under a condition in which the total amount of electricity is 1000 C/dm$^2$ to form an aluminum hydroxide coating film thereon by using an electrolytic solution (nitric acid concentration is 10 g/L, sulfuric acid concentration is 6 g/L, aluminum concentration is 4.5 g/L, and flow rate is 0.3 m/s) which is kept at 50°C. The electrolytic treatment was performed with a DC power source. The current density was set to 50 A/dm$^2$.

After forming the aluminum hydroxide film, washing with water was carried out by a spray.

(b1) Electrolytic dissolution treatment (through-hole forming step)

Next, the aluminum base material was subjected to electrolytic treatment for 24 seconds as an anode under a condition in which the total amount of electricity is 600 C/dm$^2$ to form through-holes on the aluminum base material and the aluminum hydroxide coating film by using the electrolytic solution (nitric acid concentration is 10 g/L, sulfuric acid concentration is 6 g/L, aluminum concentration is 4.5 g/L, and flow rate is 0.3 m/s) which is kept at 50°C. The electrolytic treatment was performed with a DC power source. The current density was set to 25 A/dm$^2$.

After forming the through-holes, washing with water was carried out by the spray and then the dry was carried out.

(c1) Aluminum hydroxide coating film removing treatment (film removing step)

Next, after performing electrolytic dissolution treatment on the aluminum base material, the aluminum base material was immersed in an aqueous solution (liquid temperature 35°C) having a sodium hydroxide concentration of 50 g/L and an aluminum ion concentration of 3 g/L for 32 seconds, and then immersed in an aqueous solution (liquid temperature 50°C) having the nitric acid concentration of 10 g/L and the aluminum concentration of 4.5 g/L for 40 seconds. Thereby, the aluminum hydroxide film was dissolved and removed.

Thereafter, the aluminum base material was washed with water and dried, so that the sheet member A having through-holes was manufactured.

The average opening diameter and the average opening ratio of the through-holes of the manufactured sheet member A were measured, and the average opening diameter was 24.4 μm and the average opening ratio was 5.6%.

In addition, in a case where the randomness of the through-hole arrangement of the manufactured sheet member A was evaluated according to the above description, 80% or more of through-holes were in a state of being deviated. That is, it can be seen to have high randomness. This is because the sheet member A is manufactured by a manufacturing method in which the positions of the through-holes are likely to vary.

Furthermore, a surface shape of the inner wall surface of the through-hole of the manufactured sheet member A was measured by using AFM (SPA300 manufactured by Hitachi High-Tech Corporation). The cantilever was measured in a dynamic force mode (DFM) using the OMCL-AC200TS. Ra was 0.18 ($\mu$m).

[Example 1]

A spacer was manufactured to form a through-hole (opening) having a diameter of 20 mm in a center by laser beam machining on an acrylic having a thickness of 2 mm and a diameter of 40 mm.

Three sheet members A and two spacers were alternately laminated to produce a soundproof structure body.

[Examples 2 to 4, Reference Examples 1 and 2]

In Example 2, a soundproof structure body was manufactured by alternately laminating four sheet members A and three spacers.

In Example 3, a soundproof structure body was manufactured by alternately laminating five sheet members A and four spacers.

In Example 4, a soundproof structure body was manufactured by alternately laminating six sheet members A and five spacers.

In Reference Example 1, one sheet member A was used as alone.

In Reference Example 2, a soundproof structure body was manufactured by alternately laminating two sheet members A and one spacer.

[Evaluation]

<Acoustic characteristics>

The acoustic characteristics of the manufactured soundproof structure body were measured by a transfer function method using four microphones in a home-made acrylic acoustic tube. This method is based on "ASTM E2611-09: Standard Test Method for Measurement of Normal Incidence Sound Transmission of Acoustical Materials Based on the Transfer Matrix Method". This measurement method is, for example, the same measurement principle as a 4-microphone measurement method using WinZac provided by Niho Onkyo Engineering Co., Ltd. It is possible to measure the sound transmission loss in a wide spectral band using this method. In particular, by measuring the transmittance and the reflectance at the same time and calculating 1- (transmittance + reflectance) as the absorbance, the absorbance of the sample was accurately measured. The sound transmission loss was measured in the range of 1,000 Hz to 9,000 Hz. The inner diameter of the acoustic tube is 20 mm.

The soundproof structure body was inserted into the acoustic tube, and absorbance, transmittance, and reflectance of the soundproof structure body were measured. The results are shown in Figs. 12 to 14. In addition, the number of sheet members, the total thickness, and the value of the absorbance at a frequency of 8,000 Hz are shown in Table 1.

[Table 1]

| | Number of sheet members | Total thickness (mm) | Absorbance @8000 Hz |
|---|---|---|---|
| Reference Example 1 | 1 | 0.02 | 31% |
| Reference Example 2 | 2 | 2.04 | 38% |
| Example 1 | 3 | 4.06 | 56% |
| Example 2 | 4 | 6.08 | 66% |
| Example 3 | 5 | 8.10 | 73% |
| Example 4 | 6 | 10.12 | 79% |

It can be seen, from Fig. 12 and Table 1, that in a case where the sheet member in Reference Example 1 is a single layer, the soundproofing performance can be obtained in the wide frequency band. However, the absorbance is not too large even in the high frequency range and is about 40% or less in the entire range. Furthermore, even in a case where the sheet member of Reference Example 2 has two layers, the absorbance hardly changed compared to the single sheet member.

On the other hand, in a case of the soundproof structure body in which three or more sheet members of Examples 1 to 4 are laminated, it can be seen that the greater the number of sheet members, the greater the absorbance. It can be seen that the absorbance of 50% or more can be obtained by setting three or more layers.

Furthermore, it can be seen, from Fig. 13, that the transmittance monotonously decreases with respect to the number of laminated sheet members in the wide frequency band.

On the other hand, it can be seen from Fig. 14 that the reflectance increases monotonously with respect to the number of laminated sheet members on the low frequency side, but is not affected by the number of laminated sheet members on the high frequency side.

[Examples 5 to 8, Reference Examples 3 and 4]

With reference to WO2016/060037A and WO2016/017380A, manufacturing conditions of the sheet member in Example 1 were changed to manufacture the sheet member B having an average opening diameter of 16.8 μm and an average opening ratio of 2.4%.

In a case where the randomness of the through-hole arrangement of the manufactured sheet member B was evaluated according to the above description, 80% or more of through-holes were in a state of being deviated. That is, it can be seen to have high randomness. This is because the sheet member B is manufactured by the manufacturing method in which the positions of the through-holes are likely to vary.

Furthermore, a surface shape of the inner wall surface of the through-hole of the manufactured sheet member B was measured by using AFM (SPA300 manufactured by Hitachi High-Tech Corporation). The cantilever was measured in a dynamic force mode (DFM) using the OMCL-AC200TS. Ra was 0.18 (μm).

Except that the sheet member B was used instead of the sheet member A, the soundproof structure bodys of Examples 5 to 8 and Reference Examples 3 and 4 were manufactured in the same manner as in Examples 1 to 4 and Reference Examples 1 and 2.

Regarding each manufactured soundproof structure body, absorbance was measured in the same manner as in Example 1. The results are shown in Fig. 15. In addition, the number of sheet members, the total thickness, and the value of the absorbance at a frequency of 8,000 Hz are shown in Table 2.

[Table 2]

| | Number of sheet members | Total thickness (mm) | Absorbance @8000 Hz |
|---|---|---|---|
| Reference Example 3 | 1 | 0.02 | 43% |
| Reference Example 4 | 2 | 2.04 | 46% |
| Example 5 | 3 | 4.06 | 62% |
| Example 6 | 4 | 6.08 | 71% |
| Example 7 | 5 | 8.10 | 71% |
| Example 8 | 6 | 10.12 | 72% |

It can be seen, from Fig. 15 and Table 2, that as in Examples 1 to 4 and Reference Examples 1 and 2, in a case where the sheet member is a single layer or two layers, the absorbance is less than 50% in the entire region. On the other hand, it can be seen that the absorbance of 50% or more can be obtained in the wide frequency band by setting three or more sheet members. In addition, it can be seen that the greater the number of sheet members, the greater the absorbance.

[Example 9]

With reference to WO2016/060037A and WO2016/017380A, manufacturing conditions of the sheet member in Example 1 were changed to manufacture the sheet member C having an average opening diameter of 46.5 μm and an average opening ratio of 7.3%.

In a case where the randomness of the through-hole arrangement of the manufactured sheet member C was evaluated according to the above description, 80% or more of through-holes were in a state of being deviated. That is, it can be seen to have high randomness. This is because the sheet member C is manufactured by the manufacturing method in which the positions of the through-holes are likely to vary.

Furthermore, a surface shape of the inner wall surface of the through-hole of the manufactured sheet member C was measured by using AFM (SPA300 manufactured by Hitachi High-Tech Corporation). The cantilever was measured in a dynamic force mode (DFM) using the OMCL-AC200TS. Ra was 0.18 (μm).

Except that the sheet member C was used instead of the sheet member A, the soundproof structure bodys of Example 9 was manufactured in the same manner as in Example 4.

[Comparative example 1]

Black urethane (a low resilience urethane sheet KTHU-1010 manufactured by Hikari Co., Ltd.) which has a thickness of 10 mm and is typically used as a high performance sound absorber for sound was set to Comparative example 1.

Regarding the soundproof structure bodys in Example 9 and Comparative example 1, the absorbance was measured in the same manner as in Example 1. The results are shown in Fig. 16 together with Example 4 and Example 8.

All of Examples and Comparative examples have the entire thickness of about 10 mm.

It can be seen that Examples of the present invention have high absorbance in the wide frequency band even compared with the urethane which is a porous sound absorbing body.

[Example 10]

Next, using a two microphone transfer function method, the sound absorption rate was measured in a configuration in which a wall surface (wall member) was provided on the rear surface and reflected sound returned. That is, the sound absorption rate is defined by "1-reflectance". The diameter of the acoustic tube was also 20 mm.

By using the same sheet member as in Example 1, a soundproof structure body having five layers configuration with a distance of 2 mm between sheets was manufactured. The distance from the wall surface to the outermost surface (surface farthest from the wall surface) formed of porous aluminum was adjusted to 10 mm. That is, the distance from the sheet member on the rearmost surface (wall surface side) to the wall surface is about 2 mm.

[Comparative example 2]

The urethane which has the thickness of 10 mm and is used in Comparative example 1 was disposed in contact with the wall surface, and the sound absorption rate was measured.

The results are shown in Fig. 17.

Even in a case where there is the wall surface, it can be seen that in a case of being compared with the urethane (porous sound absorbing body), the sound absorption rate of the soundproof structure body according to the embodiment of the present invention is higher in the wide frequency band than that of the urethane.

[Simulation 1]

Next, a simulation and an experiment were compared.

The simulation was implemented in an acoustic module of the finite element method calculation software COMSOL ver 5.2a (COMSOL Corporation). A sheet member having micro through-holes was modeled according to the Maa equation. The Maa equation is for calculating the complex acoustic impedance of a sheet member from the thickness, the average opening diameter, and the average opening ratio of the through-holes shown in "Potential of microperforated panel absorber. Dah-You Maa. The Journal of Acoustical Society of America 104, 2861 (1998)" by DY Maa. This makes it possible to mathematically model and handle a sheet member having a large number of micro through-holes.

A simulation was performed to calculate absorbance by preparing a model having the same configuration as in Example 3 (five sheet members and distance of 2 mm between sheets).

The experimental result and the simulation result are shown in Fig 18.

It can be seen from Fig. 18 that the simulation and the experiment reasonably correspond to each other.

[Simulation 2]

A configuration in which four sheet members having the same parameters as the sheet member of Example 1 were laminated with a distance of 3.3 mm was modeled and the simulation was performed to calculate absorbance. The total thickness is 9.98 mm.

Furthermore, as Comparative example, the porous sound absorbing body having the thickness of 10 mm was modeled and the simulation was performed to calculate absorbance. The porous sound absorbing body was modeled using Delany-Bazley equation (DB equation). In addition, unit thickness flow resistance was calculated at three levels of 10,000, 20,000, and 50,000 [Pa·s/m$^2$] by DB equation.

The results are shown in Fig. 19.

A general porous sound absorbing body such as glass wool has flow resistance of about 20,000 [Pa·s/m$^2$]. It can be seen from Fig. 19 that the soundproof structure body according to the embodiment of the present invention can obtain a high absorbance even compared with a porous sound absorbing body having flow resistance of 50,000 [Pa·s/m$^2$] which is more excellent absorbance. Therefore, it was also clarified from the simulation in which the soundproof structure body according to the embodiment of the present invention has soundproofing performance exceeding the conventional porous sound absorbing body having the same thickness.

[Simulation 3]

Next, the total thickness was fixed and the number of sheet members was changed to perform a comparison.

A sheet member was set to have the same parameters as the sheet member of Example 1, the number of sheets being 2, 3, 6, 11, and the total thickness of each sheet member being about 10 mm, so that a model was prepared and calculated. In this case, the distances between sheets are 10 mm, 5 mm, 2 mm, and 1 mm.

The results are shown in Fig. 20.

It can be seen from Fig. 20 that in a case where the number of sheet members is two, the absorbance decreases on the high frequency side with a peak. This indicates that since the inter-sheet distance is large in a case of two sheet members, the absorption becomes resonant absorption and thus the absorption in the broad band is difficult. Considering with reference to Reference Example 2, it can be seen that obtaining the absorbance in the broad band is difficult in the case of two sheet members.

It can be seen that in a case of three or more of sheet members, the absorbance is large in the wide band from a low frequency to a high frequency, and high absorbance is obtained up to a high frequency range of 10,000 Hz or more.

In particular, it can be seen that in a case where a distance is 2 mm (six sheet members) and a distance is 5 mm (three sheet members), the absorbance is large, and an optimal value of an inter-sheet distance is in this region.

[Simulation 4]

Furthermore, distances between sheets are respectively set to 5 mm (3 sheet members), 3.3 mm (4 sheet members), 2.5 mm (5 sheet members), 2 mm (6 sheet members), 1 mm (11 sheet members) and each calculation was performed.

The results are shown in Fig. 21 and Table 3.

[Table 3]

| Inter-sheet distance (mm) | Number of sheet members | Total thickness (mm) | Absorbance @8000 Hz |
|---|---|---|---|
| 1 | 11 | 10 | 70% |
| 2 | 6 | 10 | 79% |
| 2.5 | 5 | 10 | 81% |
| 3.3 | 4 | 10 | 82% |
| 5 | 3 | 10 | 82% |

It can be seen, From Fig. 21 and Table 3, in a case where the inter-sheet distance is 1 mm, the absorbance decreases. It is considered that the number of laminated sheet members is large so that the reflection increases.

[Simulation 5]

Next, a comparison regarding the arrangement order in a case of a configuration in which the arrangement distances of the sheet members are different was performed.

A sheet member was set to have the same parameters as the sheet member of Example 1, the number of sheets being 5, and the total thickness of each sheet member being about 10 mm, so that a model was prepared and calculated. In this case, two distances between the sheets were set to 2 mm, two remaining distances between the sheets was set to 3 mm, and then calculation was performed by changing the order of the inter-sheet distance. Specifically, calculation was performed on a configuration of 2 mm-2 mm-3 mm-3 mm, a configuration of 2 mm-3 mm-2 mm-3 mm, a configuration of 2 mm-3 mm-3 mm-2 mm, a configuration of 3 mm-2 mm-2 mm-3 mm, a configuration of 3 mm-3 mm-2 mm-2 mm, and a configuration of 3 mm-2 mm-3 mm-2 mm from a sound incident direction, respectively.

The results are shown in Fig. 22 and Table 4.

[Table 4]

| Inter-sheet distance (mm) | Absorbance @8000 Hz | Absorbance @16000 Hz |
|---|---|---|
| 2-2-3-3 | 78% | 87% |
| 2-3-2-3 | 80% | 87% |
| 2-3-3-2 | 81% | 86% |
| 3-2-2-3 | 82% | 92% |
| 3-3-2-2 | 84% | 90% |
| 3-2-3-2 | 82% | 91% |

It can be seen, from Fig. 22 and Table 4, that the absorbance becomes high in a case where a portion of 3 mm having greater inter-sheet distance is disposed on a sound incident side. In addition, it can be seen that the absorbance changes by changing the order of the inter-sheet distance. In addition, it can be seen that the order of the inter-sheet distance is preferably symmetric.

[Simulation 6]

Furthermore, the number of sheet members was set to 4, two inter-sheet distances were set to 4 mm, one remaining inter-sheet distance was set to 2 mm, and calculation was performed by changing the order of the distances between sheets. Specifically, calculation was performed on a configuration of 2 mm-4 mm-4 mm, a configuration of 4 mm-2 mm-4 mm, and a configuration of 4 mm-4 mm-2 mm from the sound incident direction, respectively.

The results are shown in Fig. 23 and Table 5.

[Table 5]

| Inter-sheet distance (mm) | Absorbance @8000 Hz | Absorbance @16000 Hz |
|---|---|---|
| 2-4-4 | 79% | 83% |
| 4-2-4 | 83% | 92% |
| 4-4-2 | 85% | 89% |

It can be seen, from Fig. 23 and Table 5, that the absorbance becomes high in a case where a portion of distance of 4 mm between sheets is disposed on a sound incident side. In addition, it can be seen that the absorbance changes by changing the order of the inter-sheet distance.

In order to verify the results of the simulations, a sheet member having micro through-holes was manufactured by using the following microfabrication method.

1. Nickel electroforming method
2. Laser plastic processing

<Nickel electroforming method>

A plurality of cylindrical protruding portions each having a diameter of 24.4 μm were formed in a predetermined array pattern on the silicon substrate using an etching method by photolithography. The center-to-center distance between adjacent protruding portions was adjusted and the arrangement pattern was a square grid arrangement. At this time, the area ratio occupied by the protruding portions is about 5.6%.

Then, using a nickel electroforming method, that is, electrochemical reaction, nickel was electrodeposited on a silicon substrate using the silicon substrate, on which the protruding portions were formed, as a prototype to form a nickel film having a thickness of 20 μm. Thereafter, the nickel film was peeled off from the silicon substrate and subjected to surface polishing. As a result, a nickel sheet member having a plurality of through-holes formed in a square grid arrangement was manufactured. The diameter and the opening ratio of the through-hole of the manufactured sheet member were confirmed with an optical microscope, and the diameter was 24.4 μm and the opening ratio was 5.6%. The size was A4 size.

A sheet member having through-holes with the diameter of several tens of micrometers at any opening ratio can be manufactured in the same manner as described above except that the photolithography pattern for the silicon substrate is changed. A sheet member having through-holes with an opening diameter of 16.8 μm and an opening ratio of 2.4% and a sheet member having through-holes with an opening diameter of 46.5 μm and an opening ratio of 7.3% was also manufactured.

<Laser beam machining>

Micro through-holes can be formed on metal materials and plastic films using a high power short pulse laser. Through-holes having a diameter of 24.4 μm and an opening ratio of 5.6% were formed on a polyimide film having a thickness of 20 μm by using Master series of a laser beam machine manufactured by Hikari Co., Ltd. Since polyimide is a light transmitting material, a sheet member having micro through-holes that transmit light could be produced.

In addition, through-holes having the diameter of 24.4 μm and the opening ratio of 5.6% were formed on SUS 430 plate having a thickness of 20 μm.

A sheet member having through-holes with the diameter of several tens of micrometers at any opening ratio can be manufactured in the same manner as described above except that the processed pattern of the through-holes is changed. A sheet member having through-holes with an opening diameter of 16.8 μm and an opening ratio of 2.4% and a sheet member having through-holes with an opening diameter of 46.5 μm and an opening ratio of 7.3% was also manufactured.

<Verification>

As described above, an experiment was performed in the same manner as Examples 1 to 10 using a nickel sheet member having the micro through-holes manufactured by using the nickel electroforming method, a polyimide sheet member having the micro through-holes manufactured by using laser beam machining, and a stainless steel sheet member, and the results were reasonably reproduced.

In addition, reproduction experiments were performed under the conditions of each simulation result, and the simulation results were reasonably reproduced.

[Simulation 7]

Regarding the optimal average opening ratio with respect to the average opening diameter of the through-holes, detailed calculation was performed in a case where the average opening diameter was 100 μm or less. Regarding one sheet member, the optimal average opening ratio for each average opening diameter of the through-holes was calculated at thicknesses of 10 μm, 20 μm, 30 μm, 50 μm, and 70 μm. The results are shown as log-log graphs in Fig 24. It is found from the graphs in Fig. 24 that the optimal average opening ratio changes by approximately -1.6 to the average opening diameter of the through-holes.

More specifically, in a case where the optimal average opening ratio is rho_center, the average opening diameter of the through-holes is phi (μm), and the thickness of the sheet member is t (μm), the log-log graphs in Fig. 24 are approximated by a power function, so that it is clarified that the optimal average opening ratio rho_center is determined as

$$\text{rho_center} = a \times \text{phi}^{-1.6}$$

$$a = 2 + 0.25 \times t.$$

In this way, it is clarified that in a case where the average opening diameter of the through-holes is particularly small, the optimal average opening ratio is determined by the thickness of the sheet member and the average opening diameter of the through-holes rather than the smaller the average opening ratio, the higher the absorbance. The optimal average opening ratio increases as the thickness of the sheet member increases, and decreases as the average opening diameter increases.

As described above, a range in which the absorbance increases is gradually widened around the optimal average opening ratio. In order to analyze details, the result of changing the average opening ratio in the simulation in which the thickness of the sheet member is set to 50 μm is shown in Fig. 25. The average opening diameter of the through-holes was changed to 10 μm, 15 μm, 20 μm, 30 μm, and 40 μm, and the average opening ratio was changed from 0.5% to 99%.

In any average opening diameter, a range of the average opening ratio in which the absorbance increases is widened around the optimal average opening ratio. As a feature, the small average opening diameter of the through-holes is dispersed over the range which is a wide range of the average opening ratio of which the absorbance increases. In addition, the average opening ratio side higher than the optimal average opening ratio has a wide range in which the absorbance increases.

In a case of one sheet member, the maximum value of the absorbance is approximately 50% in any average opening diameter in a range of the average opening diameter of 0.1 μm or more and less than 100 μm, and therefore a lower limit opening ratio and an upper limit opening ratio in which the absorbance is 30%, 40%, and 45% are respectively shown in Table 6. In addition, the ranges of each absorbance from the optimal average opening ratio are shown in Table 7.

For example, in a case where the average opening diameter of the through-holes is 20 μm, the optimal average opening ratio is 11%, and the average opening ratio at which the absorbance is 40% or more has a lower limit of 4.5% and an upper limit of 28%. In this case, the range of the average opening ratio at which the absorbance of 40% based on the optimal average opening ratio is (4.5% - 11.0%) = -6.5% to (28.0% - 11.0%) = 17.0%, so that the range of -6.5% to 17.0% is shown in Table 7.

[Table 6]

| Average opening diameter | Optimal average opening ratio | Range 30% | | Range 40% | | Range 45% | |
|---|---|---|---|---|---|---|---|
| | | Lower limit | Upper limit | Lower limit | Upper limit | Lower limit | Upper limit |
| 10μm | 39.0% | 9.0% | over 99% | 15.0% | 96.0% | 20.5% | 73.0% |
| 15μm | 17.5% | 4.5% | 77.0% | 7.0% | 47.0% | 9.5% | 34.0% |
| 20μm | 11.0% | 2.5% | 46.0% | 4.5% | 28.0% | 6.0% | 20.5% |
| 30μm | 5.5% | 1.5% | 23.0% | 2.5% | 13.5% | 3.0% | 10.0% |
| 40μm | 3.0% | 1.0% | 14.0% | 1.5% | 8.0% | 2.0% | 6.0% |

[Table 7]

| Average opening diameter | Range from optimal average opening ratio | | |
|---|---|---|---|
| | Range 45% | Range 40% | Range 30% |
| 10μm | -18.5% to 34% | -24.0% to 57.0% | -30.0% or more |
| 15μm | -8.0% to 16.5% | -10.5% to 29.5% | -13.0% to 59.5% |
| 20μm | -5.0% to 9.5% | -6.5% to 17.0% | -8.5% to 35.0% |
| 30μm | -2.5% to 4.5% | -3.0% to 8.0% | -4.0% to 17.5% |
| 40μm | -1.0% to 3.0% | -1.5% to 5.0% | -2.0% to 11.0% |

From Table 7, width of the absorbance is compared for each average opening diameter of the through-holes, and as a result, in a case where the average opening diameter of the through-holes is phi (μm), the width of the absorbance is changed at approximately $100 \times phi^{-2}$. Therefore, regarding each absorbance of 30%, 40%, and 45%, an appropriate range can be determined for average opening diameter.

That is, an absorbance range of 30% is required to be within a range in which rho_center - $0.085 \times (phi/20)^{-2}$ is the average opening ratio of the lower limit and rho_center + $0.35 \times (phi/20)^{-2}$ is the average opening ratio of the upper limit, by using rho_center of the optimal average opening ratio and a range in which the average opening diameter of the through-holes is 20 μm as the basis. However, the average opening ratio is limited to a range larger than 0 and smaller than 1 (100%).

It is desirable to an absorbance range of 40% and desirable that rho_center - $0.24 \times (phi/10)^{-2}$ is the average opening ratio of the lower limit and rho_center + $0.57 \times (phi/10)^{-2}$ is the average opening ratio of the upper limit. Here, in order to reduce errors as much as possible, a reference of the average opening diameter was set to 10 μm.

It is further desirable to the range of the absorbance of 45% and further desirable that rho_center - 0.185 ×

$(phi/10)^{-2}$ is the average opening ratio of the lower limit and rho_center + 0.34 × $(phi/10)^{-2}$ is the average opening ratio of the upper limit.

Furthermore, in order to determine a range of the optimal average opening ratio in a case of smaller absorbance, detailed calculation was performed in a range in which the average opening ratio is small. As a representative example, results in a case where the thickness of the sheet member is 50 μm and the average opening diameter of the through-holes is 30 μm are shown in Fig. 26.

Regarding each absorbance of 10%, 15%, and 20%, a range of the average opening ratio which has the absorbances and an approximate expression are shown Tables 8 and 9, respectively. In Table 4, "rho_center" is described as "rc".

[Table 8]

| Average opening diameter | Optimal average opening ratio | Range 10% | | Range 15% | | Range 20% | |
|---|---|---|---|---|---|---|---|
| | | Lower limit | Upper limit | Lower limit | Upper limit | Lower limit | Upper limit |
| 30 μm | 5.5% | 0.3% | 85.0% | 0.5% | 56.0% | 0.7% | 40.0% |

[Table 9]

| | Lower limit | Upper limit |
|---|---|---|
| Range 10% | rc - 0.052 × $(phi/30)^{-2}$ | rc + 0.795 × $(phi/30)^{-2}$ |
| Range 15% | rc - 0.050 × $(phi/30)^{-2}$ | rc + 0.505 × $(phi/30)^{-2}$ |
| Range 20% | rc - 0.048 × $(phi/30)^{-2}$ | rc + 0.345 × $(phi/30)^{-2}$ |

From Tables 8 and 9, an absorbance range of 10% is required to be within a range in which rho_center - 0.052 × $(phi/30)^{-2}$ is the average opening ratio as the lower limit and rho_center + 0.795 × $(phi/30)^{-2}$ is the average opening ratio as the upper limit, by using rho_center of the optimal average opening ratio and a range in which the average opening diameter of the through-holes is 30 μm as the basis. However, the average opening ratio is limited to a range larger than 0 and smaller than 1 (100%).

Desirably, the absorbance is 15% or more, and the range is within a range in which rho_center - 0.050 × $(phi/30)^{-2}$ is the average opening ratio of the lower limit and rho_center + 0.505 × $(phi/30)^{-2}$ is the average opening ratio of the upper limit.

More desirably, the absorbance is 20% or more, and the range is within a range in which rho_center - 0.048 × $(phi/30)^{-2}$ is the average opening ratio of the lower limit and rho_center + 0.345 × $(phi/30)^{-2}$ is the average opening ratio of the upper limit.

Even more desirably, the absorbance is within the range of the average opening ratio of 30% or more, 40% or more, or 45% or more, and the absorbance can be further increased.

As described above, features of sound absorption phenomenon due to the friction in the through-hole were clarified by using the simulation. Furthermore, the magnitude of the absorbance was determined by the thickness of the sheet member, the average opening diameter and the average opening ratio of the through-holes, and the optimal value range was determined.

From the above, the effect of the present invention is apparent.

Explanation of References

| | |
|---|---|
| 10a, 10b, 10c, 10d: | soundproof structure body |
| 11: | aluminum base material |
| 12: | sheet member |
| 13: | aluminum hydroxide coating film |
| 14: | through-hole |
| 20a, 20b: | spacer |
| 21: | opening |
| 22: | wall member |

## Claims

1. A soundproof structure body comprising:

three or more sheet members each having a plurality of through-holes that penetrate the sheet member in a thickness direction,
wherein an average opening diameter of the through-holes is 1 μm or more and 250 μm or less,
an average opening ratio of the through-holes is 0.1% or more and less than 10%,
the three or more sheet members are laminated in the thickness direction to be spaced apart from each other, and
an inter-sheet distance of the sheet members adjacent to each other is 0.1 mm or more and 10 mm or less.

2. A soundproof structure body comprising:

three or more sheet members each having a plurality of through-holes that penetrate the sheet member in a thickness direction,
wherein an average opening diameter of the through-holes is 1 μm or more and 250 μm or less,
a thickness of the sheet member is 1 μm or more and 300 μm or less,
the three or more sheet members are laminated in the thickness direction to be spaced apart from each other, and
an inter-sheet distance of the sheet members adjacent to each other is 0.1 mm or more and 10 mm or less.

3. The soundproof structure body according to claim 1 or 2,
wherein in a case of assuming that phi (μm) is the average opening diameter of the through-holes and t (μm) is a thickness of the sheet member, the average opening ratio rho of the through-holes is in a range larger than 0 and smaller than 1, and is in a range of rho_center = $(2 + 0.25 \times t) \times phi^{-1.6}$ as a center, rho_center - $(0.052 \times (phi/30)^{-2})$ as a lower limit, and rho_center + $(0.795 \times (phi/30)^{-2})$ as an upper limit.

4. The soundproof structure body according to any one of claims 1 to 3,
wherein the average opening diameter of the through-holes is 1 μm or more and less than 100 μm.

5. The soundproof structure body according to any one of claims 1 to 4,
wherein a total thickness is 30 mm or less.

6. The soundproof structure body according to any one of claims 1 to 5,
wherein the inter-sheet distance is 2 mm or more.

7. The soundproof structure body according to any one of claims 1 to 6,
wherein at least one of the inter-sheet distances is different from other inter-sheet distances.

8. The soundproof structure body according to claim 7,
wherein a longest distance among a plurality of inter-sheet distances is disposed on an outer side.

9. The soundproof structure body according to claim 7 or 8,
wherein an order of the distances between the sheets is symmetrical.

10. The soundproof structure body according to any one of claims 1 to 9,
wherein the plurality of through-holes are randomly arranged.

11. The soundproof structure body according to any one of claims 1 to 10,
wherein the plurality of through-holes is formed of two or more opening diameters different from each other.

12. The soundproof structure body according to any one of claims 1 to 11,
wherein a surface roughness Ra of an inner wall surface of the through-hole is 0.1 μm to 10.0 μm.

13. The soundproof structure body according to any one of claims 1 to 12,
wherein an inner wall surface of the through-hole is formed in a plurality of particulate shapes, and
an average particle diameter of protruding portions formed on the inner wall surface is 0.1 μm to 10.0 μm.

14. The soundproof structure body according to any one of claims 1 to 13,

wherein at least some of the through-holes have a shape having a maximum diameter inside the through-hole.

**15.** The soundproof structure body according to any one of claims 1 to 14, further comprising:
a spacer between the sheet members to ensure a distance between the sheet members adjacent to each other.

**16.** The soundproof structure body according to any one of claims 1 to 15,
wherein a wall member is disposed on one surface side of the three or more laminated sheet members.

**17.** The soundproof structure body according to any one of claims 1 to 16,
wherein a material of the sheet member is a metal material.

**18.** The soundproof structure body according to claim 17,

wherein the sheet member is formed of a conductive material, and
the average opening diameter of the through-holes is equal to or smaller than a wavelength size in a far infrared region such that an electromagnetic wave having a wavelength equal to or larger than a wavelength in the far infrared region is blocked.

**19.** The soundproof structure body according to any one of claims 1 to 18,
wherein the sheet member is formed of a material having durability against ozone.

**20.** The soundproof structure body according to any one of claims 1 to 19,
wherein a material of the sheet member is aluminum or an aluminum alloy.

**21.** A sound absorbing panel comprising:
the soundproof structure body according to any one of claims 1 to 20.

FIG. 1

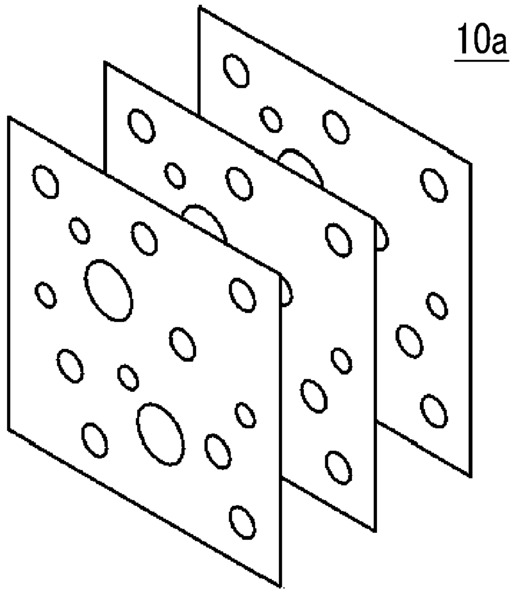


FIG. 2

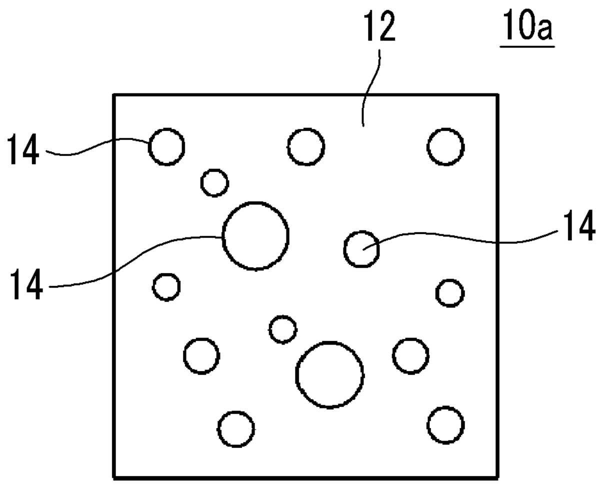

FIG. 3

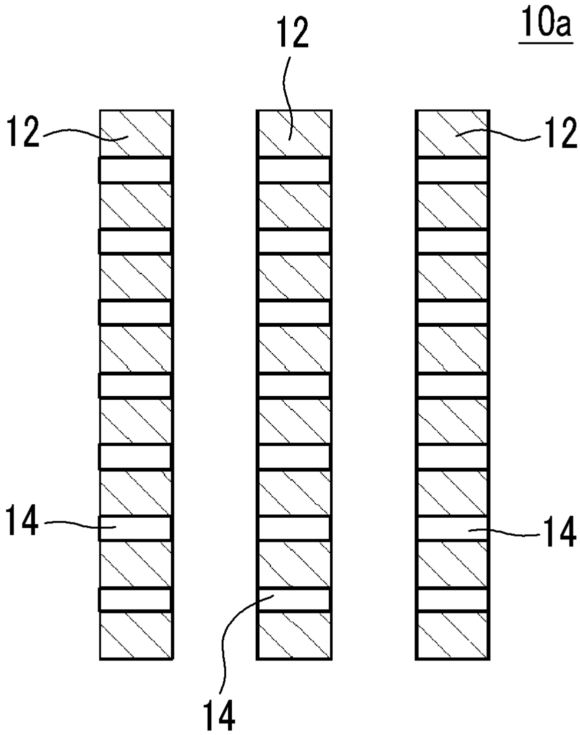


FIG. 4

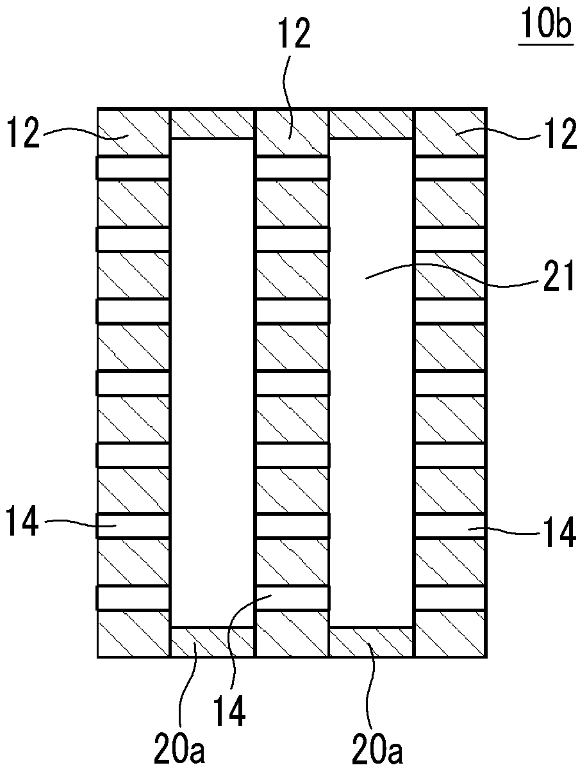

FIG. 5

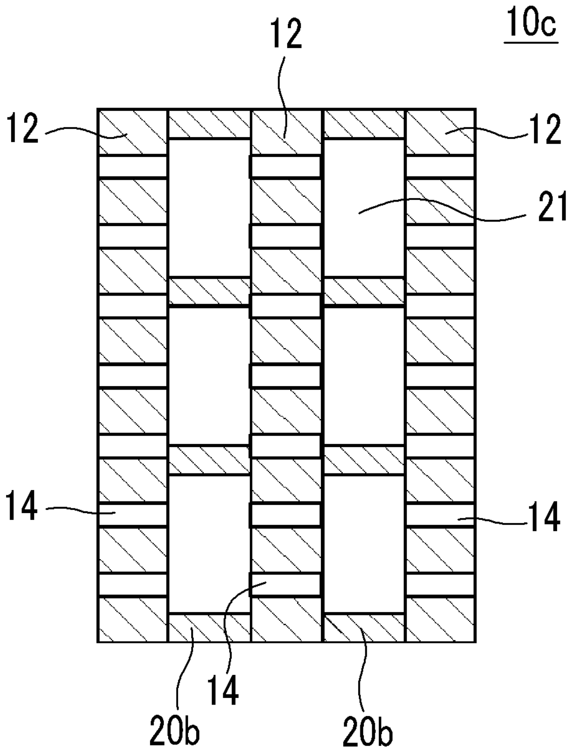


FIG. 6

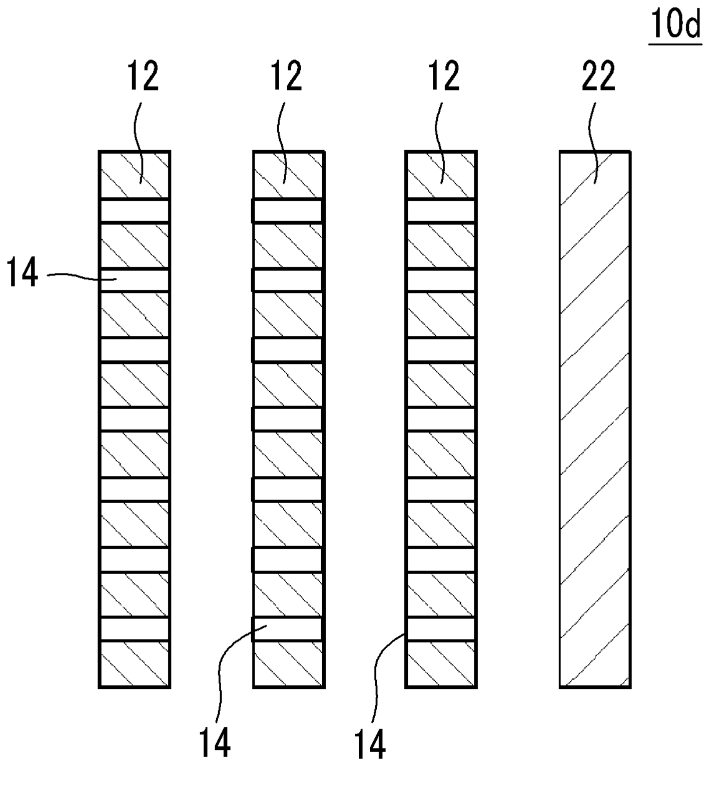

FIG. 7

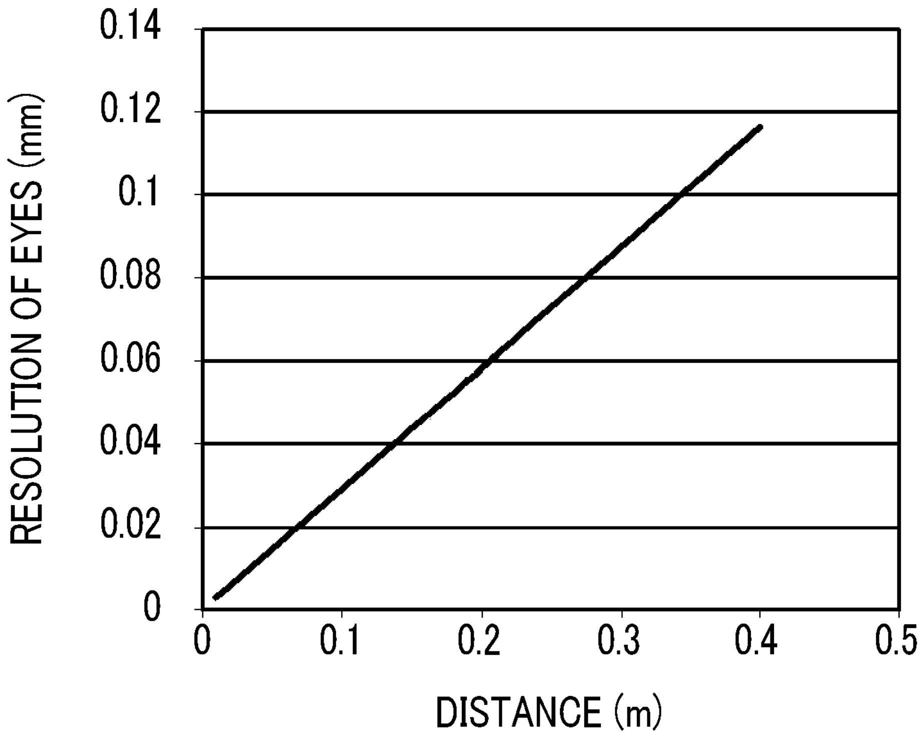
0.14
0.12
0.1
0.08
0.06
0.04
0.02
0
RESOLUTION OF EYES (mm)
0
0.1
0.2
0.3
0.4
0.5
DISTANCE (m)

FIG. 8

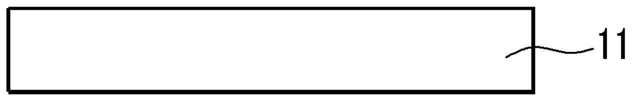


FIG. 9

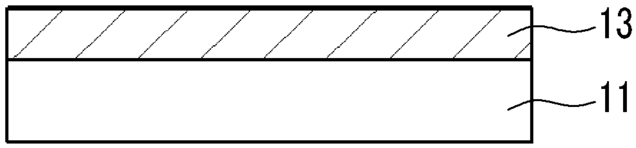


FIG. 10

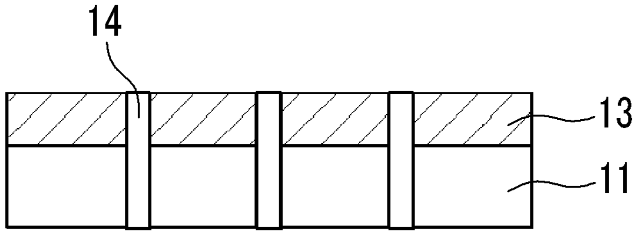


FIG. 11

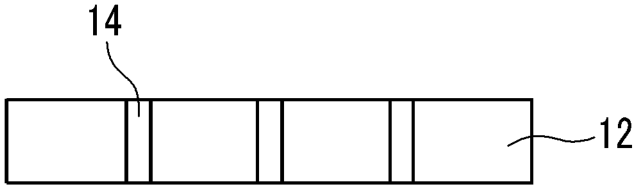

FIG. 12

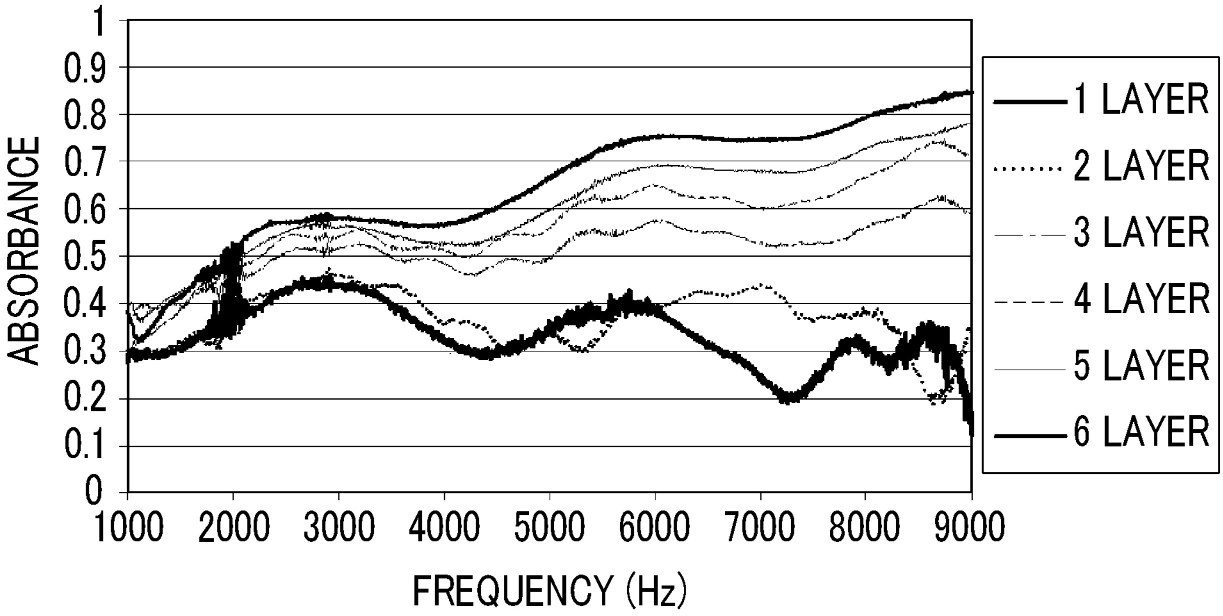
1
0.9
0.8
0.7
0.6
0.5
0.4
0.3
0.2
0.1
0
ABSORBANCE
1000
2000
3000
4000
5000
6000
7000
8000
9000
FREQUENCY (Hz)
1 LAYER
2 LAYER
3 LAYER
4 LAYER
5 LAYER
6 LAYER

FIG. 13

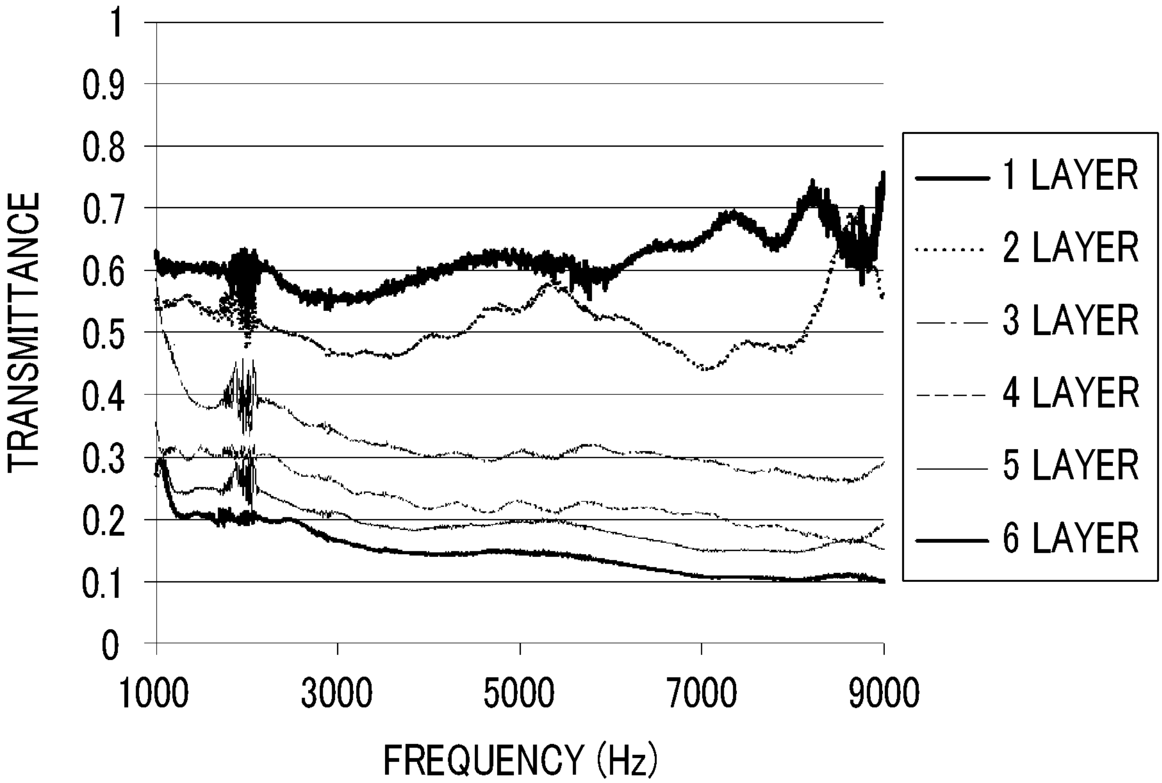
1
0.9
0.8
0.7
0.6
0.5
0.4
0.3
0.2
0.1
0
TRANSMITTANCE
1000
3000
5000
7000
9000
FREQUENCY (Hz)
1 LAYER
2 LAYER
3 LAYER
4 LAYER
5 LAYER
6 LAYER

FIG. 14

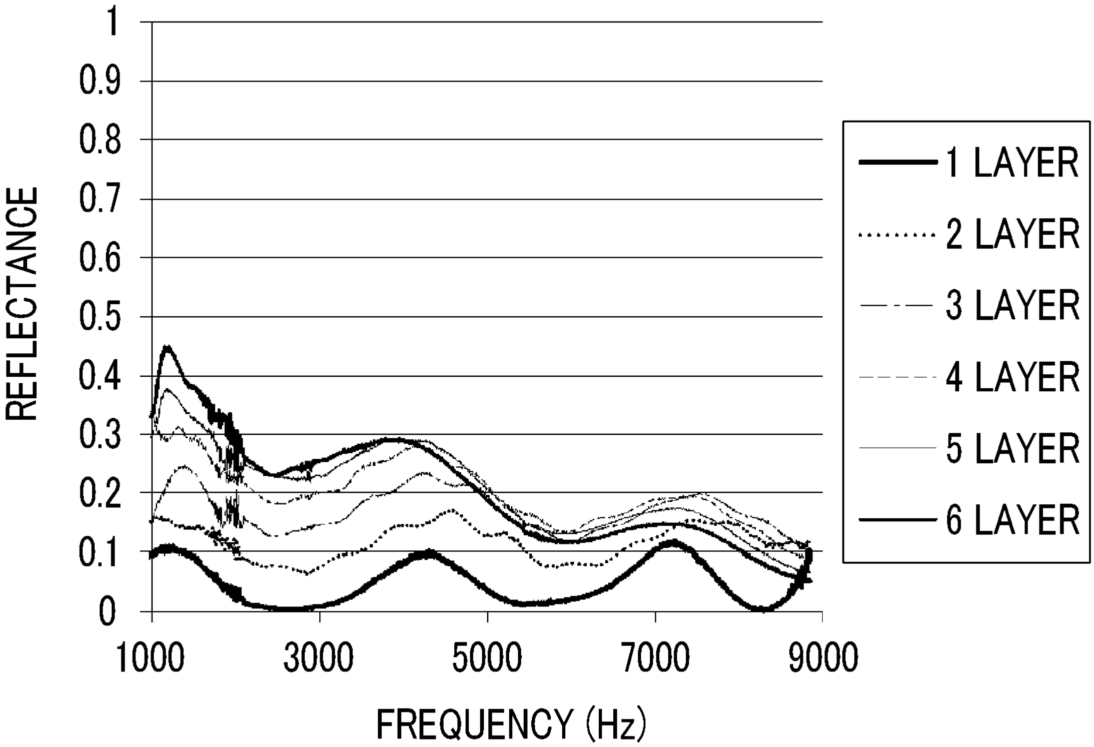
1
0.9
0.8
0.7
0.6
0.5
0.4
0.3
0.2
0.1
0
REFLECTANCE
1000
3000
5000
7000
9000
FREQUENCY (Hz)
1 LAYER
2 LAYER
3 LAYER
4 LAYER
5 LAYER
6 LAYER

FIG. 15

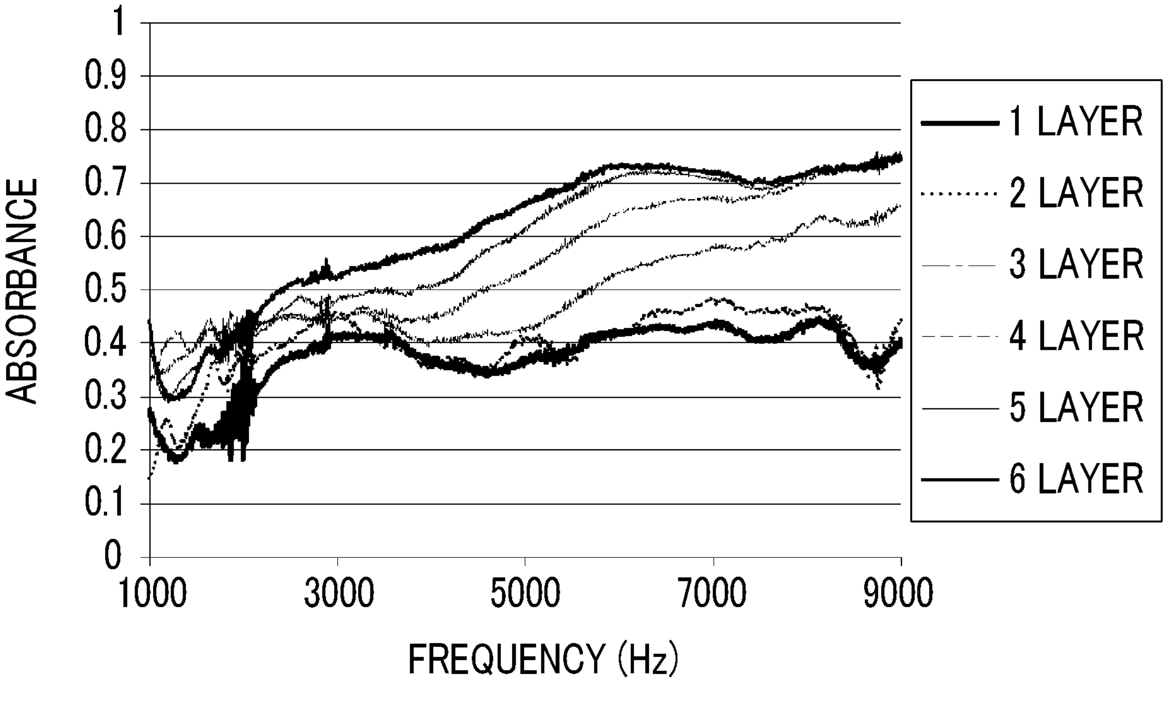
1
0.9
0.8
0.7
0.6
0.5
0.4
0.3
0.2
0.1
0
ABSORBANCE
1000
3000
5000
7000
9000
FREQUENCY (Hz)
1 LAYER
2 LAYER
3 LAYER
4 LAYER
5 LAYER
6 LAYER

FIG. 16

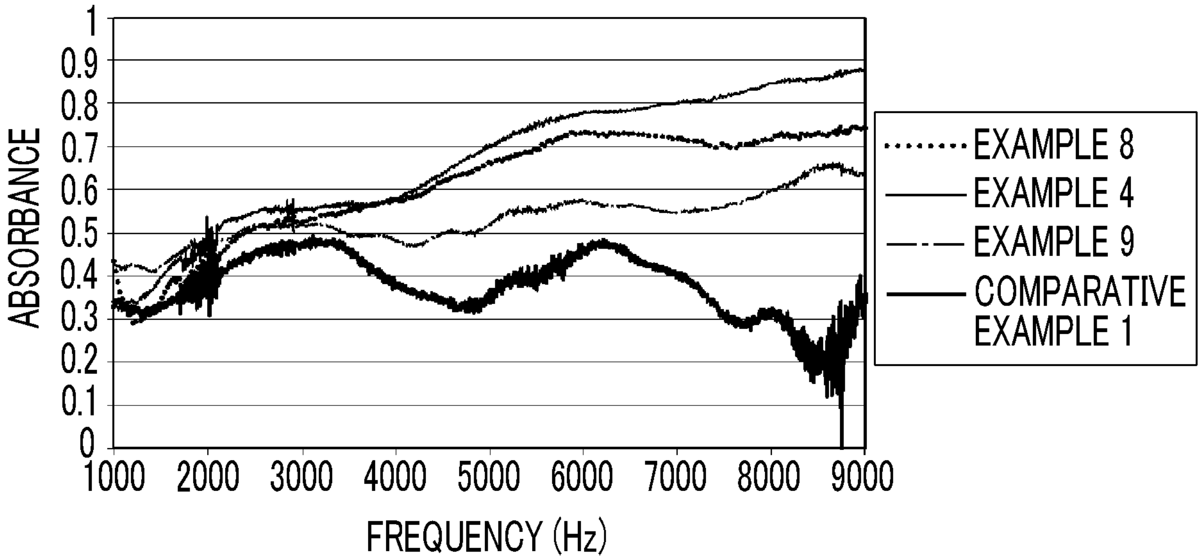
1
0.9
0.8
0.7
0.6
0.5
0.4
0.3
0.2
0.1
0
ABSORBANCE
1000 2000 3000 4000 5000 6000 7000 8000 9000
FREQUENCY (Hz)
EXAMPLE 8
EXAMPLE 4
EXAMPLE 9
COMPARATIVE EXAMPLE 1

FIG. 17

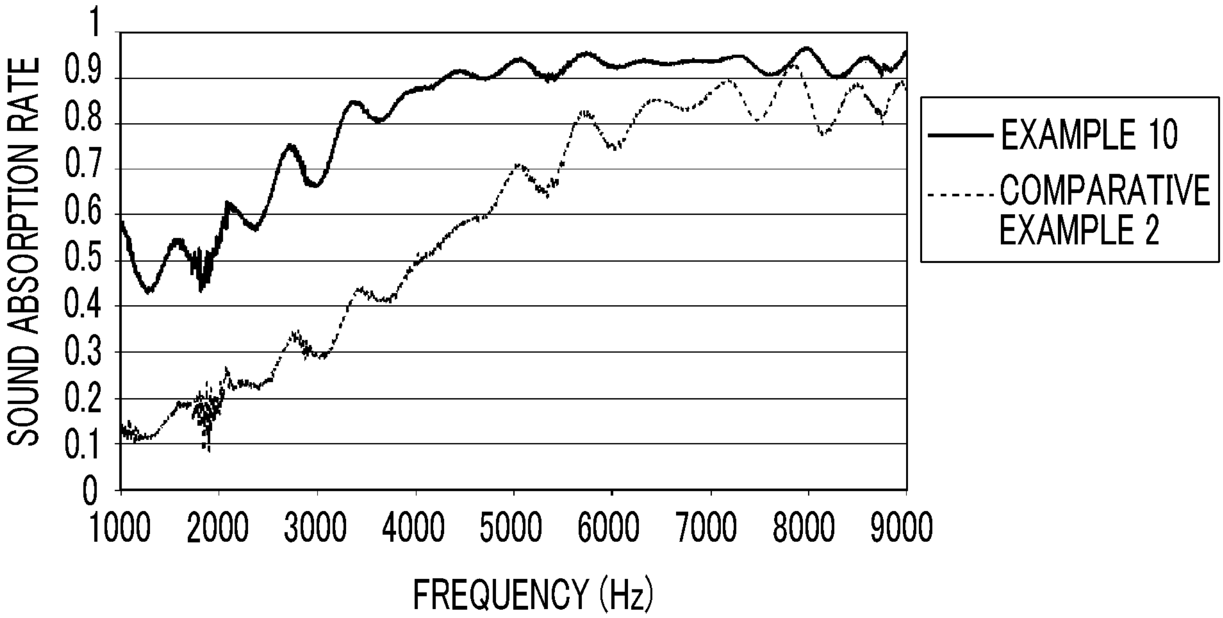
1
0.9
0.8
0.7
0.6
0.5
0.4
0.3
0.2
0.1
0
SOUND ABSORPTION RATE
1000 2000 3000 4000 5000 6000 7000 8000 9000
FREQUENCY (Hz)
EXAMPLE 10
COMPARATIVE EXAMPLE 2

FIG. 18

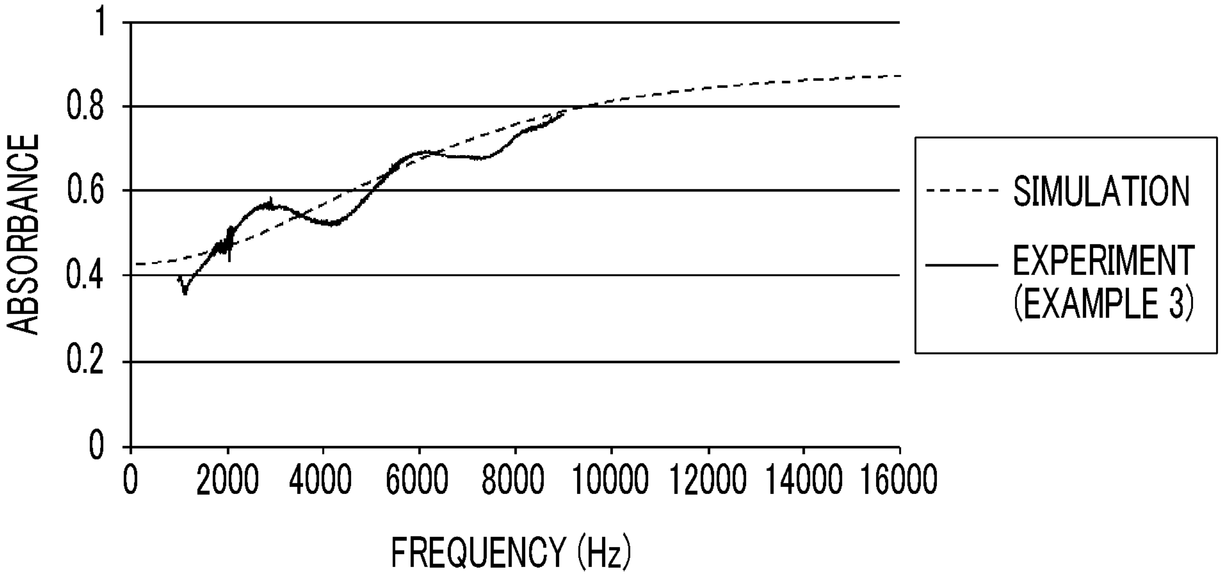
1
0.8
0.6
0.4
0.2
0
ABSORBANCE
0
2000
4000
6000
8000
10000
12000
14000
16000
FREQUENCY (Hz)
SIMULATION
EXPERIMENT (EXAMPLE 3)

FIG. 19

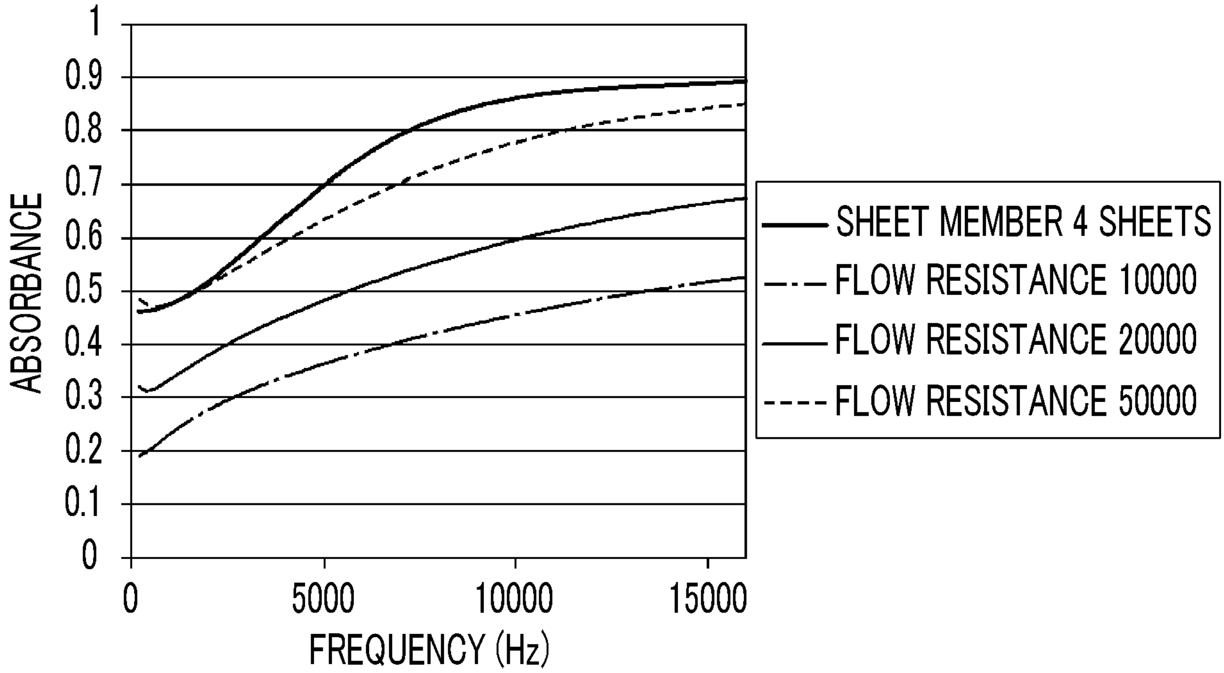
1
0.9
0.8
0.7
0.6
0.5
0.4
0.3
0.2
0.1
0
ABSORBANCE
0
5000
10000
15000
FREQUENCY (Hz)
SHEET MEMBER 4 SHEETS
FLOW RESISTANCE 10000
FLOW RESISTANCE 20000
FLOW RESISTANCE 50000

FIG. 20

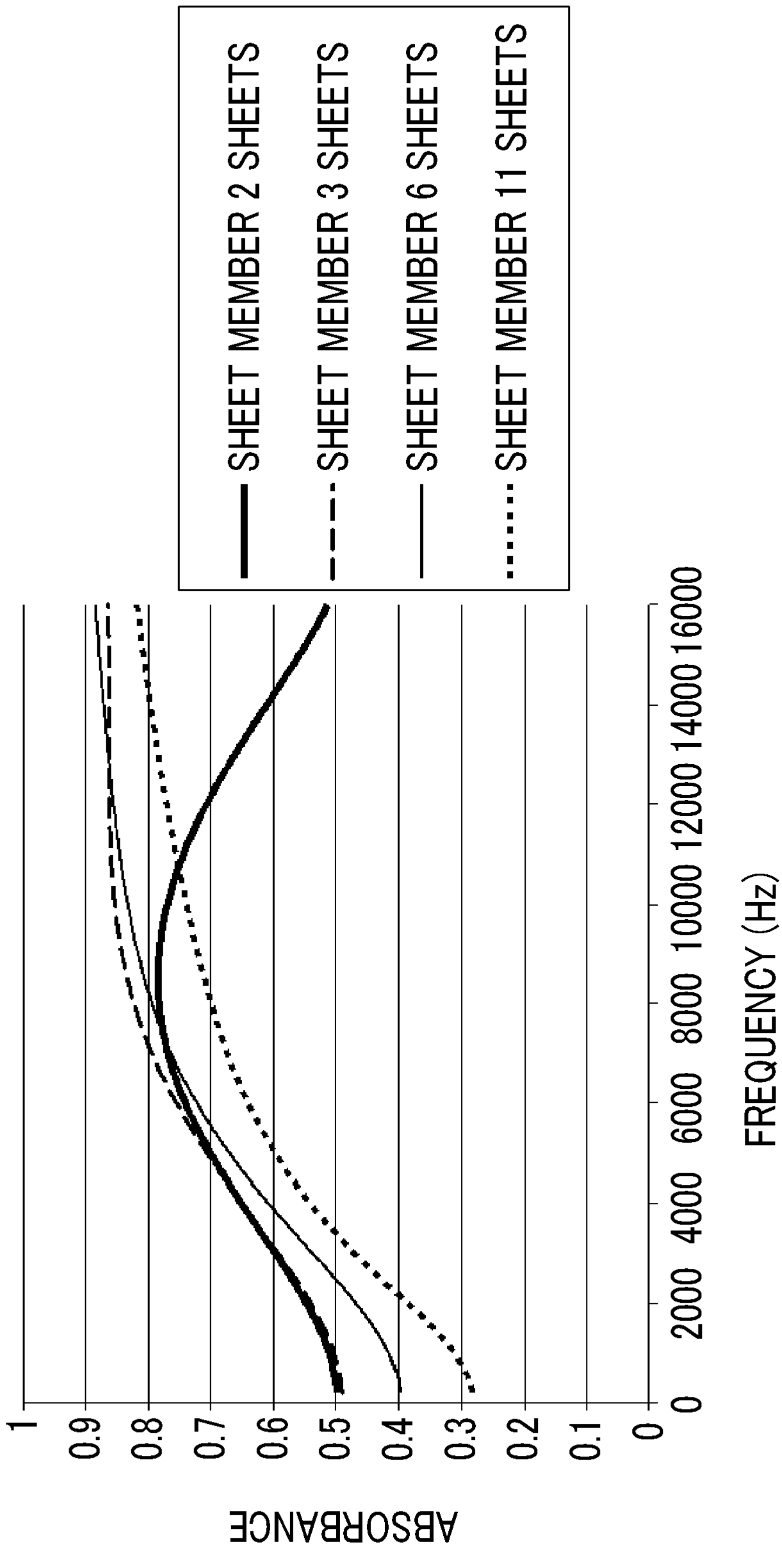

SHEET MEMBER 2 SHEETS
SHEET MEMBER 3 SHEETS
SHEET MEMBER 6 SHEETS
SHEET MEMBER 11 SHEETS
ABSORBANCE
1
0.9
0.8
0.7
0.6
0.5
0.4
0.3
0.2
0.1
0
FREQUENCY (Hz)
0
2000
4000
6000
8000
10000
12000
14000
16000

FIG. 21

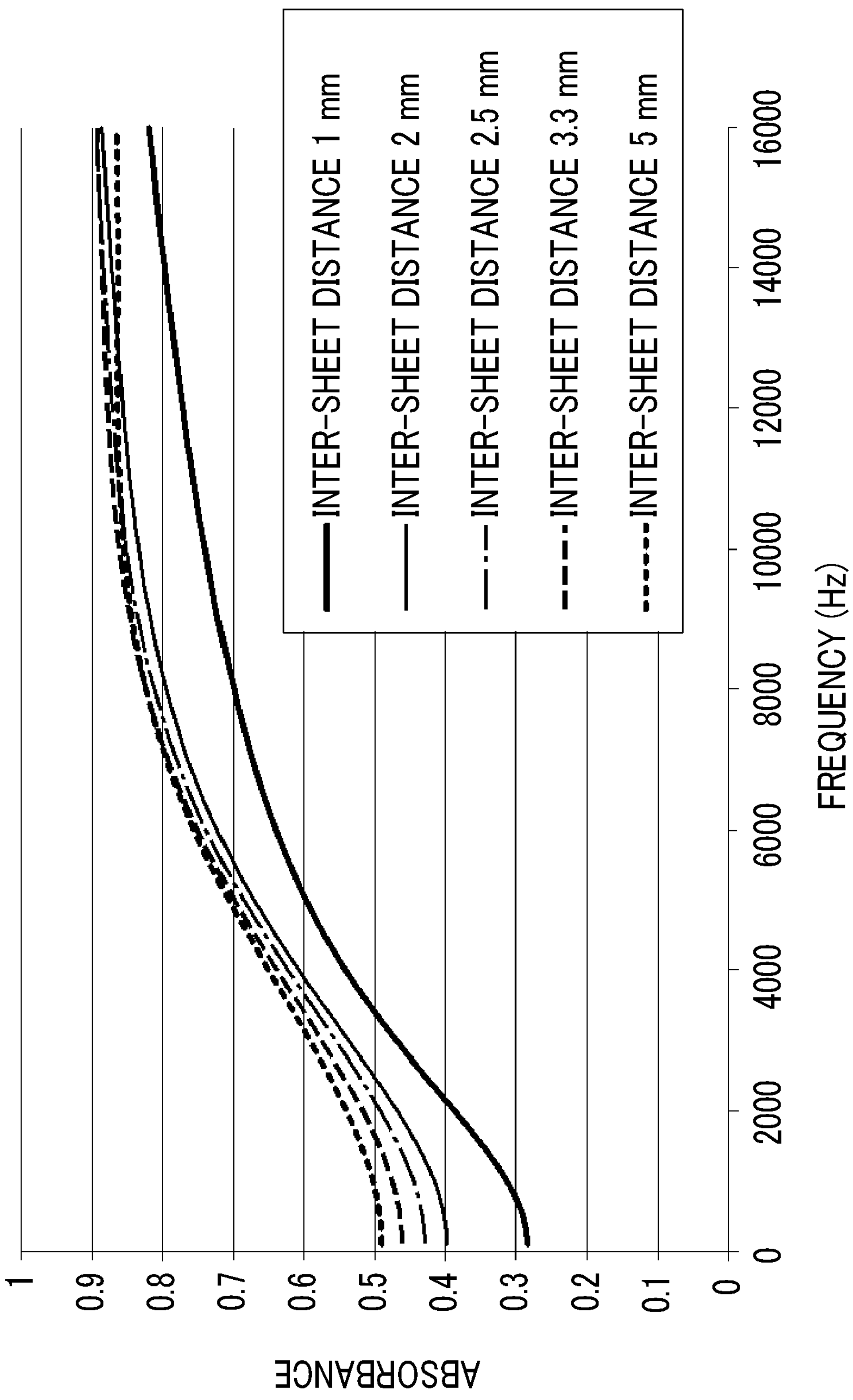
ABSORBANCE
FREQUENCY (Hz)
0
0.1
0.2
0.3
0.4
0.5
0.6
0.7
0.8
0.9
1
0
2000
4000
6000
8000
10000
12000
14000
16000
INTER-SHEET DISTANCE 1 mm
INTER-SHEET DISTANCE 2 mm
INTER-SHEET DISTANCE 2.5 mm
INTER-SHEET DISTANCE 3.3 mm
INTER-SHEET DISTANCE 5 mm

FIG. 22

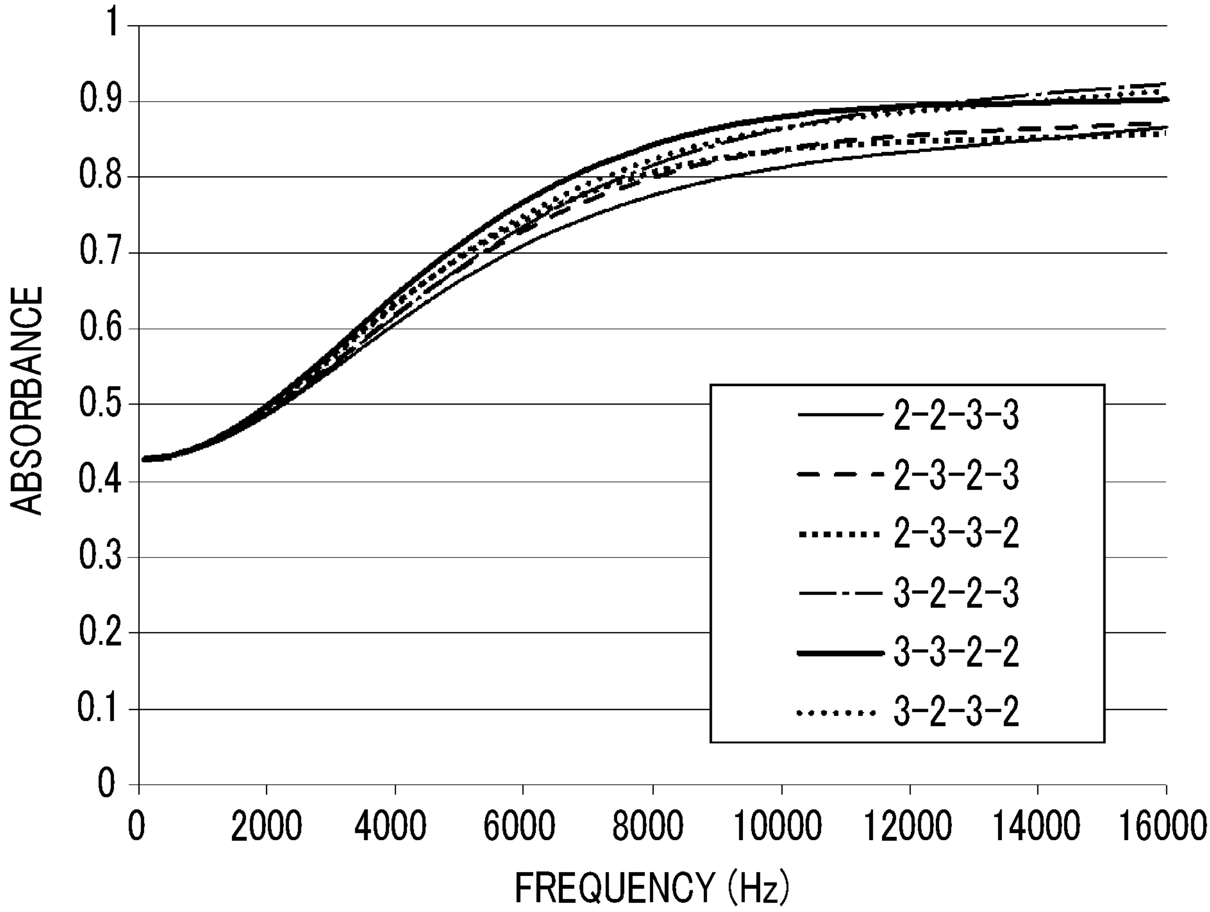
ABSORBANCE
1
0.9
0.8
0.7
0.6
0.5
0.4
0.3
0.2
0.1
0
0
2000
4000
6000
8000
10000
12000
14000
16000
FREQUENCY (Hz)
2-2-3-3
2-3-2-3
2-3-3-2
3-2-2-3
3-3-2-2
3-2-3-2

FIG. 23

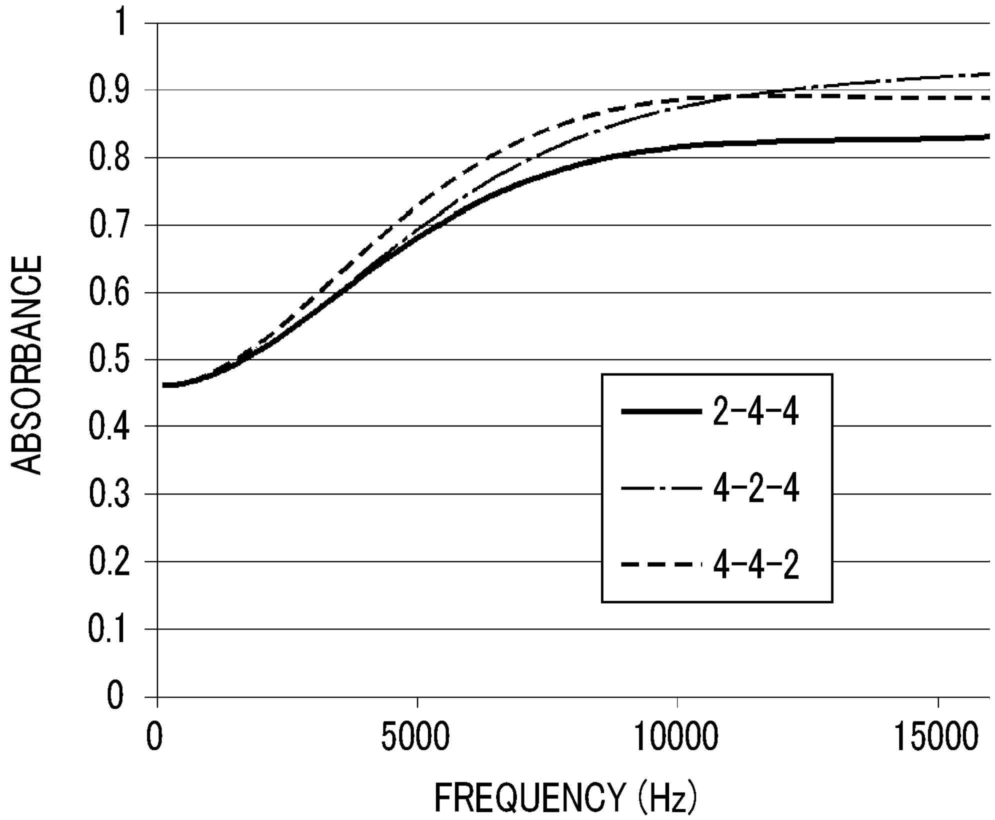
1
0.9
0.8
0.7
0.6
0.5
0.4
0.3
0.2
0.1
0
ABSORBANCE
0
5000
10000
15000
FREQUENCY (Hz)
2-4-4
4-2-4
4-4-2

FIG. 24

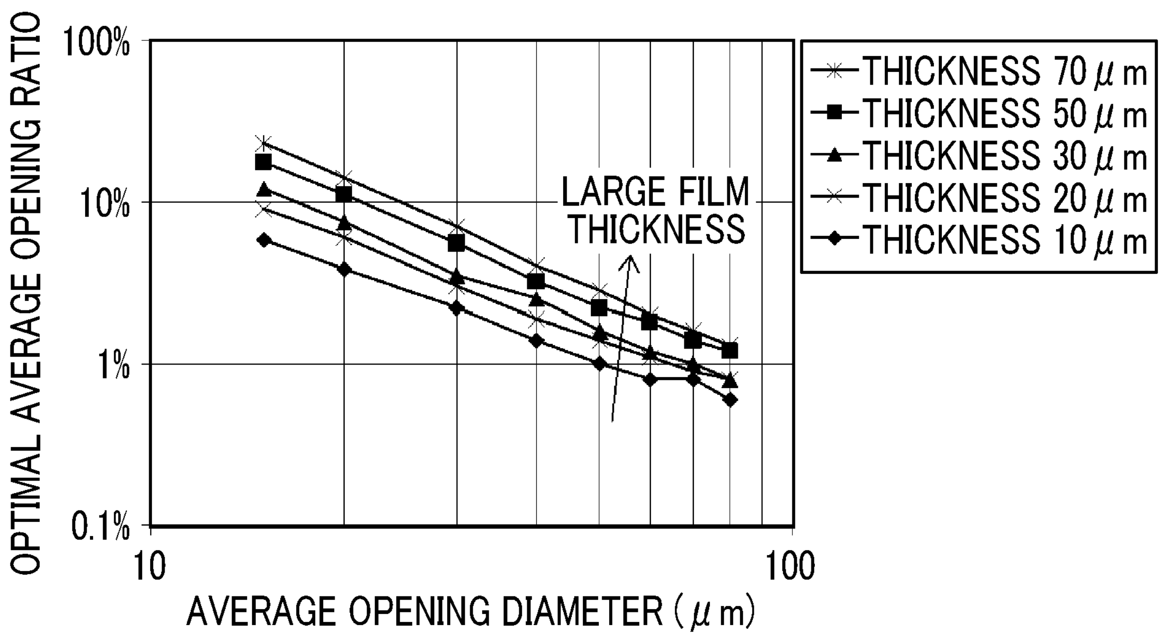
OPTIMAL AVERAGE OPENING RATIO
100%
10%
1%
0.1%
10
100
AVERAGE OPENING DIAMETER (μm)
LARGE FILM
THICKNESS
THICKNESS 70 μm
THICKNESS 50 μm
THICKNESS 30 μm
THICKNESS 20 μm
THICKNESS 10 μm

FIG. 25

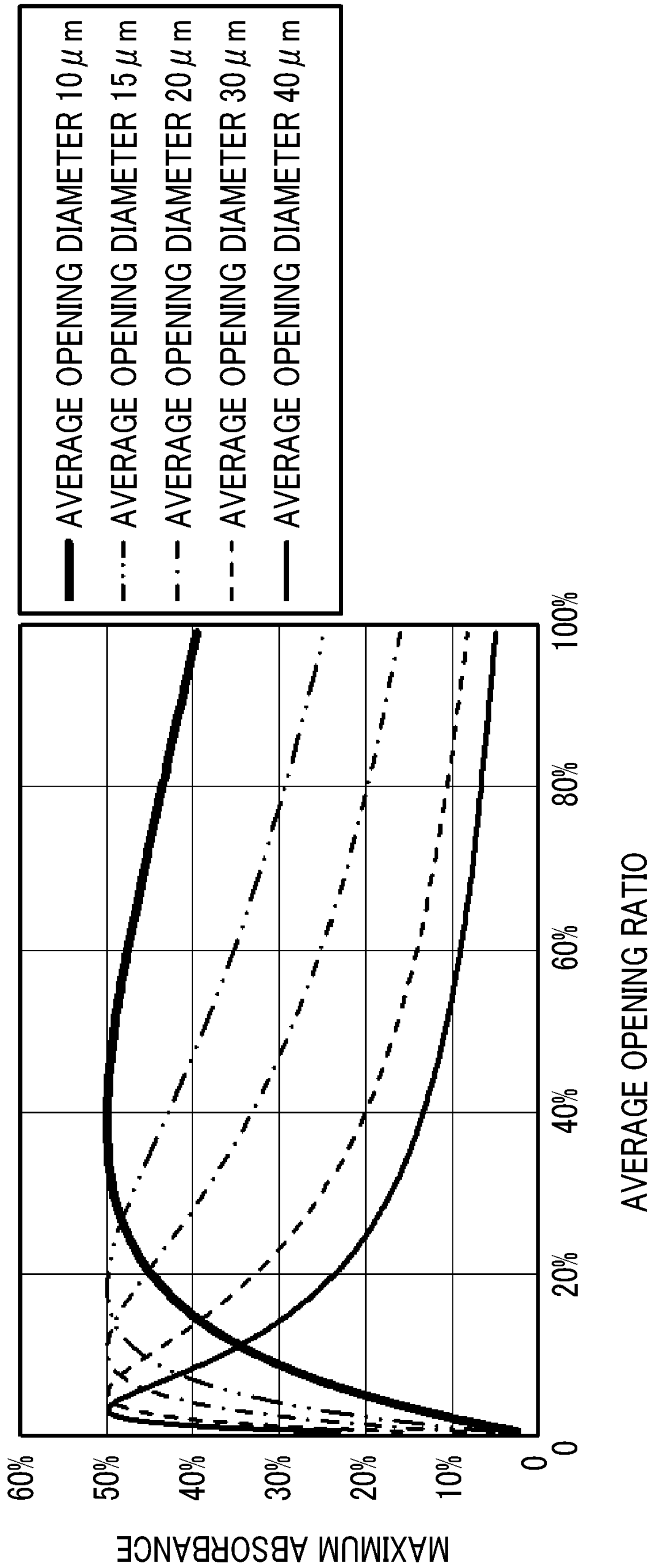
AVERAGE OPENING DIAMETER 10 μm
AVERAGE OPENING DIAMETER 15 μm
AVERAGE OPENING DIAMETER 20 μm
AVERAGE OPENING DIAMETER 30 μm
AVERAGE OPENING DIAMETER 40 μm
MAXIMUM ABSORBANCE
60%
50%
40%
30%
20%
10%
0
0
20%
40%
60%
80%
100%
AVERAGE OPENING RATIO

FIG. 26

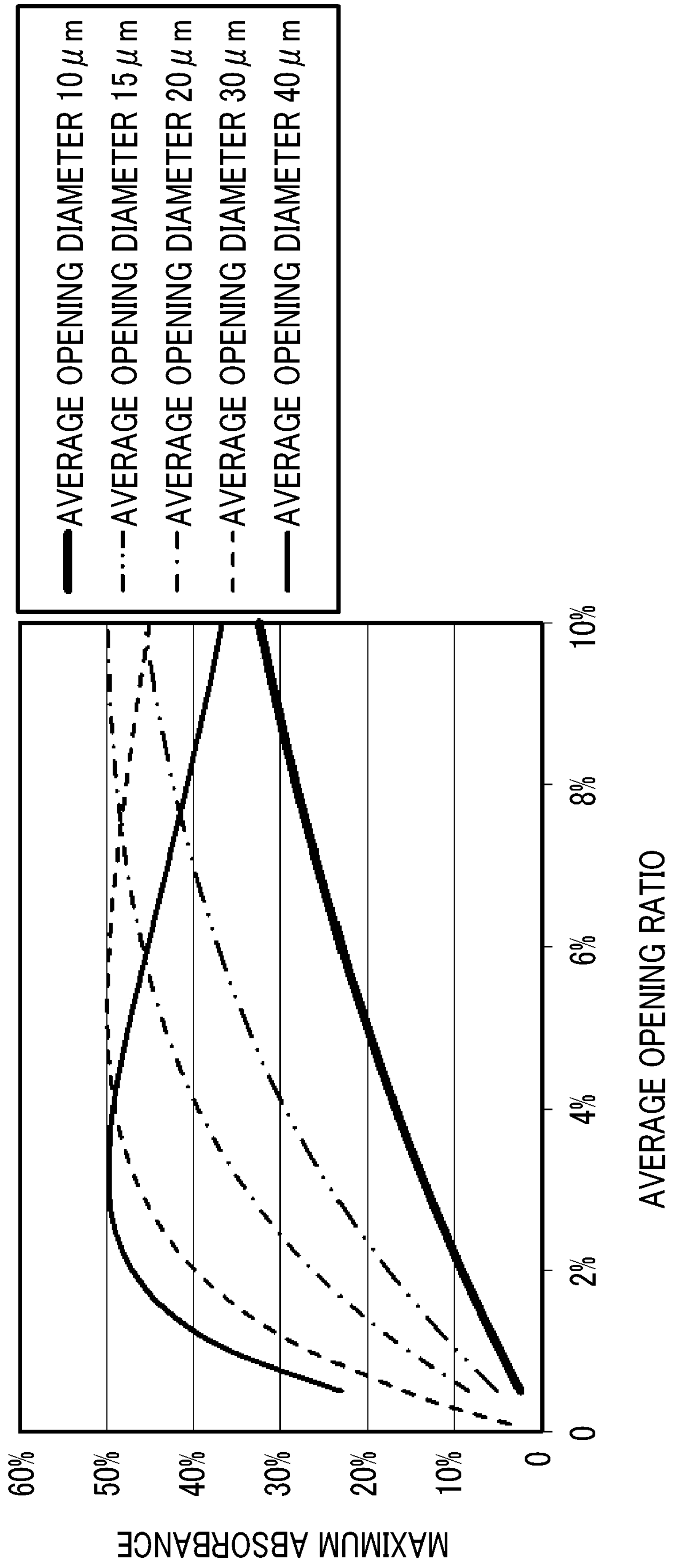
AVERAGE OPENING DIAMETER 10 μ m
AVERAGE OPENING DIAMETER 15 μ m
AVERAGE OPENING DIAMETER 20 μ m
AVERAGE OPENING DIAMETER 30 μ m
AVERAGE OPENING DIAMETER 40 μ m
MAXIMUM ABSORBANCE
60%
50%
40%
30%
20%
10%
0
AVERAGE OPENING RATIO
0
2%
4%
6%
8%
10%

## INTERNATIONAL SEARCH REPORT

International application No.
PCT/JP2018/030818

A. CLASSIFICATION OF SUBJECT MATTER
Int.Cl. G10K11/168(2006.01)i, G10K11/16(2006.01)i, G10K11/162(2006.01)i, B60R13/08(2006.01)n, E04B1/86(2006.01)n

According to International Patent Classification (IPC) or to both national classification and IPC

B. FIELDS SEARCHED

Minimum documentation searched (classification system followed by classification symbols)
Int.Cl. G10K11/168, G10K11/16, G10K11/162, B60R13/08, E04B1/86

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 12367/1987 (Laid-open No. 121530/1988) (ORIBEST CO., LTD.) 08 August 1988, publication gazette, page 12, line 16 to page 13, line 10, fig. 1 (Family: none) | 1-21 |
| Y | WO 2016/017380 A1 (FUJIFILM CORP.) 04 February 2016, paragraphs [0030], [0072]-[0084], [0091], table 1, examples 2, 6, 7 & TW 201608582 A | 1-21 |
| Y | WO 2011/089905 A1 (KOBELCO ENGINEERED CONSTRUCTION MATERIALS CO., LTD.) 28 July 2011, paragraphs [0011]-[0014], [0022], [0029], fig. 2(b), fig. 3 & US 2013/0020148 A1, paragraphs [0020]-[0023], [0031], [0038], fig. 2(b), 3 & EP 2527552 A1 & KR 10-2012-0129911 A | 16, 21 |
| A | JP 2008-138505 A (KOBE STEEL, LTD.) 19 June 2008, paragraphs [0099]-[0111], [0134], fig. 2, 3 & WO 2008/053997 A1 & TW 200837248 A | 1-21 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 October 2018 (05.10.2018) | 16 October 2018 (16.10.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007256750 A
- JP 4567513 B
- WO 2016060037 A
- JP 2011201123 A
- US 4671859 B
- US 4661219 B
- US 4618405 B
- US 4600482 B
- US 4566960 B
- US 4566958 B
- US 4566959 B
- US 4416972 B
- US 4374710 B
- US 4336113 B
- US 4184932 B
- WO 2016017380 A


### Non-patent literature cited in the description


- **DAH-YOU MAA.** *The Journal of Acoustical Society of America,* 1998, vol. 104, 2861